# EUROPEAN PATENT APPLICATION

(11) **EP 4 843 416 A2**
(43) Date of publication of application: **25.11.2026**
(21) Application number: 26202261.9
(22) Date of filing: 21.09.2020
(51) Int. Cl.: A24F 40/10

(54) **SMOKING SUBSTITUTE APPARATUS**

(30) Priority: 20.09.2019 EP 19198613
(62) Document number(s) of the earlier application(s) in accordance with Art. 76 EPC: 20789854.5 / 3 930 506
(71) Applicant: Imperial Tobacco Limited, Bristol BS3 2LL (GB)
(72) Inventor: ILLIDGE, Benjamin, Bristol, BS3 2L (GB); ASTBURY, Benjamin, Bristol, BS3 2L (GB); LU, Huanghai, Bristol, BS3 2L (GB); AGGARWAL, Nikhil, Bristol, BS3 2L (GB); PILKINGTON, Matthew, Bristol, BS3 2L (GB); KEEFE, James, Bristol, BS3 2L (GB); LACEY, Andrew, Bristol, BS3 2L (GB)
(74) Representative: Mewburn Ellis LLP

(57) **Abstract**

Provided is a smoking substitute apparatus comprising an enclosure (201) and an aerosol generator, the enclosure at least partially enclosing the aerosol generator, the aerosol generator comprising a heater and being operable to generate an aerosol by vaporising an aerosol precursor, wherein at least part of the enclosure adjacent the heater is formed from plastics material, there being provided a heat shield (202a, 202b) between said part of the enclosure and the heater and there being a heat insulating gap (203) between said part of the enclosure and the heat shield. There is also provided a smoking substitute system comprising a base unit, and the smoking substitute apparatus, wherein the smoking substitute apparatus is removably engageable with the base unit and a method of using the smoking substitute apparatus to generate an aerosol.

## Description

### Cross reference to related applications

The present disclosure claims the benefit of priority from the following application, the entire contents of which are hereby incorporated by reference:
[ME ref: 7512189; Nerudia ref: P01069]
European patent application no. 19198613.2 filed 20 September 2019

### Field of the Invention

The present invention relates to a smoking substitute apparatus and, in particular, a smoking substitute apparatus that is able to deliver nicotine to a user in an effective manner.

### Background

The smoking of tobacco is generally considered to expose a smoker to potentially harmful substances. It is thought that a significant amount of the potentially harmful substances are generated through the burning and/or combustion of the tobacco and the constituents of the burnt tobacco in the tobacco smoke itself.

Low temperature combustion of organic material such as tobacco is known to produce tar and other potentially harmful by-products. There have been proposed various smoking substitute systems in which the conventional smoking of tobacco is avoided.

Such smoking substitute systems can form part of nicotine replacement therapies aimed at people who wish to stop smoking and overcome a dependence on nicotine.

Known smoking substitute systems include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the health risks associated with conventional smoking.

In general, smoking substitute systems are intended to provide a substitute for the rituals of smoking, whilst providing the user with a similar, or improved, experience and satisfaction to those experienced with conventional smoking and with combustible tobacco products.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories. There are a number of different categories of smoking substitute systems, each utilising a different smoking substitute approach. Some smoking substitute systems are designed to resemble a conventional cigarette and are cylindrical in form with a mouthpiece at one end. Other smoking substitute devices do not generally resemble a cigarette (for example, the smoking substitute device may have a generally box-like form, in whole or in part).

One approach is the so-called "vaping" approach, in which a vaporisable liquid, or an aerosol former, sometimes typically referred to herein as "e-liquid", is heated by a heating device (sometimes referred to herein as an electronic cigarette or "e-cigarette" device) to produce an aerosol vapour which is inhaled by a user. The e-liquid typically includes a base liquid, nicotine and may include a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid and a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute systems, which typically have a sealed tank and heating element. The tank is prefilled with e-liquid and is not intended to be refilled by an end user. One subset of closed system vaping smoking substitute systems include a main body which includes the power source, wherein the main body is configured to be physically and electrically couplable to a consumable including the tank and the heating element. In this way, when the tank of a consumable has been emptied of e-liquid, that consumable is removed from the main body and disposed of. The main body can then be reused by connecting it to a new, replacement, consumable. Another subset of closed system vaping smoking substitute systems are completely disposable, and intended for one-use only.

There are also "open system" vaping smoking substitute systems which typically have a tank that is configured to be refilled by a user. In this way the entire device can be used multiple times.

An example vaping smoking substitute system is the myblu^{™} e-cigarette. The myblu^{™} e-cigarette is a closed system which includes a main body and a consumable. The main body and consumable are physically and electrically coupled together by pushing the consumable into the main body. The main body includes a rechargeable battery. The consumable includes a mouthpiece and a sealed tank which contains e-liquid. The consumable further includes a heater, which for this device is a heating filament coiled around a portion of a wick. The wick is partially immersed in the e-liquid, and conveys e-liquid from the tank to the heating filament. The system is controlled by a microprocessor on board the main body. The system includes a sensor for detecting when a user is inhaling through the mouthpiece, the microprocessor then activating the device in response. When the system is activated, electrical energy is supplied from the power source to the heating device, which heats e-liquid from the tank to produce a vapour which is inhaled by a user through the mouthpiece.

### Summary of the Invention

For a smoking substitute system it is desirable to deliver nicotine into the user's lungs, where it can be absorbed into the bloodstream. However, the present disclosure is based in part on a realisation that some prior art smoking substitute systems, such delivery of nicotine is not efficient. In some prior art systems, the aerosol droplets have a size distribution that is not suitable for delivering nicotine to the lungs. Aerosol droplets of a large particle size tend to be deposited in the mouth and/or upper respiratory tract. Aerosol particles of a small (e.g. sub-micron) particle size can be inhaled into the lungs but may be exhaled without delivering nicotine to the lungs. As a result the user would require drawing a longer puff, more puffs, or vaporising e-liquid with a higher nicotine concentration in order to achieve the desired experience.

The present disclosure is also devised to ameliorate a problem associated with the generation of heat in smoking substitute systems. Namely, when a heating device heats an aerosol precursor, the enclosure which surrounds the heater and aerosol precursor is also subjected to heating. When unshielded from the heating device, the enclosure can undergo thermal degradation, such as melting, softening, corrosion, spalling or combustion, which can result in deformation of the enclosure, and/or unwanted materials being entrained in the air flow for inhalation by a user. This phenomenon is considered to be especially likely to occur when the enclosure is made of a plastics material. It is possible to mitigate this risk by designing relatively large and bulky smoking substitute systems in which the enclosure is disposed far away from the heater. Such systems are less convenient to store and hold by a user due to their size, and more costly to manufacture due to the large amount of material used to make them.

Accordingly, there is a need for improvement in the performance of a smoking substitute system while still ensuring suitable delivery of nicotine to a user.

The present disclosure has been devised in the light of the above considerations.

In a general aspect, the present invention relates to a smoking substitute system that provides an enclosure which at least partially encloses an aerosol generator, and a heat shield between a heater of the aerosol generator and a part of the enclosure formed from plastics material.

According to a first preferred aspect there is provided a smoking substitute apparatus comprising an enclosure and an aerosol generator, the enclosure at least partially enclosing the aerosol generator, the aerosol generator comprising a heater and being operable to generate an aerosol by vaporising an aerosol precursor, wherein at least part of the enclosure adjacent the heater is formed from plastics material, there being provided a heat shield between said part of the enclosure and the heater and there being a heat insulating gap between said part of the enclosure and the heat shield.

In use, the heater generates heat energy. Some of this energy heats and the aerosol precursor so as to generate an aerosol, with the remainder of the heat energy being excess heat energy. Some of the excess heat energy, in the absence of the present invention, would disadvantageously heat the part of the enclosure formed of plastics material. Advantageously, the heat shield, which is provided between the heater and said part of the enclosure, intercepts and absorbs a significant proportion of the excess heat directed towards said part of the enclosure and reduces heating thereof. This reduces the risk of thermal degradation of said part of the enclosure. Note that, because a significant part of the air flow may bypass the vaporisation chamber, the typical cooling effect of the bypass airflow through the vaporisation chamber is not provided. Therefore, the material of the enclosure is particularly at risk of thermal degradation in the absence of the features of the present invention. Additionally, the aerosol generator and the enclosure can be positioned closer together than a corresponding case in which the heat shield is absent. Furthermore, the arrangement of the heat shield to include a heat insulating gap between the heat shield and said part of the enclosure, further reduces the risk of thermal degradation of said part of the enclosure, by limiting transfer of heat energy from the heat shield to said part of the enclosure via thermal conduction.

Optionally, the heat shield may have a contact portion which is in contact with the enclosure. The provision of such a contact portion allows the heat shield to be physically supported and held in place by the enclosure.

Conveniently, the contact portion may have a surface area smaller than one fifth of a total surface area of the heat shield. This limits heat transfer from the heat shield to the enclosure via thermal conduction, while allowing the enclosure to support and hold the heat shield.

Advantageously, the heat shield may have a region proximal to the heater and a region distal to the heater, the contact portion being in the region distal to the heater. This avoids direct thermal conduction between the proximal region of the heat shield, which in use absorbs more heat from the heater than the distal region, and the enclosure. Hence, this reduces heating of the enclosure during and after use of the apparatus.

The contact portion may include an end part of the heat shield. This allows the heat shield to be easily configured such that the end part, and hence at least a part of the contact portion, is further away from the heater than the remainder of the heat shield. This further limits heating of the enclosure during and after use of the apparatus.

The heat shield may be fitted to the enclosure so as to restrict movement between the heat shield and the enclosure. This reduces the risk of the heat shield moving to a position at which it does not adequately intercept heat energy directed towards the enclosure.

The heat shield may provide an electrical connection between the heater and an electrical contact configured to connect with a power supply. This limits the need for additional electrical connecting materials, which allows the apparatus to be produced at a reduced cost.

The heat insulating gap may have a thickness of no more than 0.5 mm. Such a gap thickness limits heat transfer between the heat shield and said part of the enclosure via thermal radiation. Alternatively, the heat insulating gap may have a thickness of no more than 0.3 mm, or no more than 0.11 mm.

The heat shield may be formed of a material selected from metals, thermosetting polymers and ceramics and composites thereof. Such materials are resistant to thermal degradation, and thus the risk of failure of such heat shields is low.

The heat shield may present to the heater a heat-absorbing surface having an area of at least twice as large as a plan view projection of the heater onto the heatshield. This ensures that heat radiating from the heater does not easily bypass the heat shield and excessively heat the enclosure. The area of the heat-absorbing surface of the heat shield may be at least 20 mm², or more preferably at least 30 mm², or more preferably at least 40 mm².

There may be provided first and second heat shield plates disposed on opposing sides of the heater. Such plates provide protection to the enclosure on opposing sides of the heater, without significantly increasing the size of the apparatus. The first heat shield plate and the second heat shield plate may be substantially identical in geometry.

The enclosure may be sealed to air flow asides from an outlet. In such examples, the aerosol generator may be referred to as residing within a stagnant chamber. In such examples, the provision of a heat shield and heat insulating gap between the heat shield and enclosures is particularly advantageous as the enclosure and other components are not passively cooled by air passing through the enclosure.

The enclosure may include and an air inlet and an outlet, and the heat shield may be configured to heat air entering the enclosure through the air inlet. The heat insulating gap may be adjacent to the air inlet, and may define an air inlet passage. Advantageously, heating the air entering the enclosure reduces the temperature difference between the aerosol generated by the aerosol generator and the air in which it is entrained. Reducing the temperature difference reduces the cooling rate, which has been found to promote the formation of larger droplets of aerosol.

The smoking substitute apparatus may be comprised by or within a cartridge configured for engagement with a base unit, the cartridge and the base unit together forming a smoking substitute system.

According to a second preferred aspect, there is provided a smoking substitute system comprising:
a base unit, and
a smoking substitute apparatus according to the first preferred aspect wherein the apparatus is comprised by or within a cartridge configured for engagement with a base unit, the cartridge and the base unit together forming a smoking substitute system, wherein the smoking substitute apparatus is removably engageable with the base unit.

According to a third preferred aspect, there is provided a method of using the smoking substitute apparatus according to the first preferred aspect to generate an aerosol.

The smoking substitute apparatus may be in the form of a consumable. The consumable may be configured for engagement with a main body. When the consumable is engaged with the main body, the combination of the consumable and the main body may form a smoking substitute system such as a closed smoking substitute system. For example, the consumable may comprise components of the system that are disposable, and the main body may comprise non-disposable or non-consumable components (e.g. power supply, controller, sensor, etc.) that facilitate the generation and/or delivery of aerosol by the consumable. In such an embodiment, the aerosol precursor (e.g. e-liquid) may be replenished by replacing a used consumable with an unused consumable.

Alternatively, the smoking substitute apparatus may be a non-consumable apparatus (e.g. that is in the form of an open smoking substitute system). In such embodiments an aerosol former (e.g. e-liquid) of the system may be replenished by re-filling, e.g. a reservoir of the smoking substitute apparatus, with the aerosol precursor (rather than replacing a consumable component of the apparatus).

In light of this, it should be appreciated that some of the features described herein as being part of the smoking substitute apparatus may alternatively form part of a main body for engagement with the smoking substitute apparatus. This may be the case in particular when the smoking substitute apparatus is in the form of a consumable.

Where the smoking substitute apparatus is in the form of a consumable, the main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitting, or the like.

Thus, the smoking substitute apparatus may comprise one or more engagement portions for engaging with a main body. In this way, one end of the smoking substitute apparatus may be coupled with the main body, whilst an opposing end of the smoking substitute apparatus may define a mouthpiece of the smoking substitute system.

The smoking substitute apparatus may comprise a reservoir configured to store an aerosol precursor, such as an e-liquid. The e-liquid may, for example, comprise a base liquid. The e-liquid may further comprise nicotine. The base liquid may include propylene glycol and/or vegetable glycerine. The e-liquid may be substantially flavourless. That is, the e-liquid may not contain any deliberately added additional flavourant and may consist solely of a base liquid of propylene glycol and/or vegetable glycerine and nicotine.

The reservoir may be in the form of a tank. At least a portion of the tank may be light-transmissive. For example, the tank may comprise a window to allow a user to visually assess the quantity of e-liquid in the tank. A housing of the smoking substitute apparatus may comprise a corresponding aperture (or slot) or window that may be aligned with a light-transmissive portion (e.g. window) of the tank. The reservoir may be referred to as a "clearomizer" if it includes a window, or a "cartomizer" if it does not.

The smoking substitute apparatus may comprise a passage for fluid flow therethrough. The passage may extend through (at least a portion of) the smoking substitute apparatus, between openings that may define an inlet and an outlet of the passage. The outlet may be at a mouthpiece of the smoking substitute apparatus. In this respect, a user may draw fluid (e.g. air) into and through the passage by inhaling at the outlet (i.e. using the mouthpiece). The passage may be at least partially defined by the tank. The tank may substantially (or fully) define the passage, for at least a part of the length of the passage. In this respect, the tank may surround the passage, e.g. in an annular arrangement around the passage.

The aerosol generator may comprise a wick. The wick may comprise a porous material, capable of wicking the aerosol precursor. A portion of the wick may be exposed to air flow in the passage. The wick may also comprise one or more portions in contact with liquid stored in the reservoir. For example, opposing ends of the wick may protrude into the reservoir and an intermediate portion (between the ends) may extend across the passage so as to be exposed to air flow in the passage. Thus, liquid may be drawn (e.g. by capillary action) along the wick, from the reservoir to the portion of the wick exposed to air flow.

The heater may comprise a heating element, which may be in the form of a filament wound about the wick (e.g. the filament may extend helically about the wick in a coil configuration). The heating element may be wound about the intermediate portion of the wick that is exposed to air flow in the passage. The heating element may be electrically connected (or connectable) to a power source. Thus, in operation, the power source may apply a voltage across the heating element so as to heat the heating element by resistive heating. This may cause liquid stored in the wick (i.e. drawn from the tank) to be heated so as to form a vapour and become entrained in air flowing through the passage. This vapour may subsequently cool to form an aerosol in the passage, typically downstream from the heating element.

The enclosure may define a vaporisation chamber. The vaporisation chamber may form part of the passage in which the heater is located. The vaporisation chamber may be arranged to be in fluid communication with the inlet and outlet of the passage. The vaporisation chamber may be an enlarged portion of the passage. In this respect, the air as drawn in by the user may entrain the generated vapour in a flow away from heater. The entrained vapour may form an aerosol in the vaporisation chamber, or it may form the aerosol further downstream along the passage. The vaporisation chamber may be at least partially defined by the tank. The tank may substantially (or fully) define the vaporisation chamber. In this respect, the tank may surround the vaporisation chamber, e.g. in an annular arrangement around the vaporisation chamber.

In use, the user may puff on a mouthpiece of the smoking substitute apparatus, i.e. draw on the smoking substitute apparatus by inhaling, to draw in an air stream therethrough. A portion, or all, of the air stream (also referred to as a "main air flow") may pass through the vaporisation chamber so as to entrain the vapour generated at the heater. That is, such a main air flow may be heated by the heater (although typically only to a limited extent) as it passes through the vaporisation chamber. Alternatively or in addition, a portion of the air stream (also referred to as a "dilution air flow" or "bypass air flow") may bypass the vaporisation chamber and be directed to mix with the generated aerosol downstream from the vaporisation chamber. That is, the dilution air flow may be an air stream at an ambient temperature and may not be directly heated at all by the heater. The dilution air flow may combine with the main air flow for diluting the aerosol contained therein. The dilution air flow may merge with the main air flow along the passage downstream from the vaporisation chamber. Alternatively, the dilution air flow may be directly inhaled by the user without passing though the passage of the smoking substitute apparatus.

As a user puffs on the mouthpiece, vaporised e-liquid entrained in the passing air flow may be drawn towards the outlet of the passage. The vapour may cool, and thereby nucleate and/or condense along the passage to form a plurality of aerosol droplets, e.g. nicotine-containing aerosol droplets. A portion of these aerosol droplets may be delivered to and be absorbed at a target delivery site, e.g. a user's lung, whilst a portion of the aerosol droplets may instead adhere onto other parts of the user's respiratory tract, e.g. the user's oral cavity and/or throat. Typically, in some known smoking substitute apparatuses, the aerosol droplets as measured at the outlet of the passage, e.g. at the mouthpiece, may have a droplet size, d₅₀, of less than 1µm.

In some embodiments of the invention, the d₅₀ particle size of the aerosol particles is preferably at least 1 µm. Typically, the d₅₀ particle size is not more than 10 µm, preferably not more than 9 µm, not more than 8 µm, not more than 7 µm, not more than 6 µm, not more than 5 µm, not more than 4 µm or not more than 3 µm. It is considered that providing aerosol particle sizes in such ranges permits improved interaction between the aerosol particles and the user's lungs.

The particle droplet size, d₅₀, of an aerosol may be measured by a laser diffraction technique. For example, the stream of aerosol output from the outlet of the passage may be drawn through a Malvern Spraytec laser diffraction system, where the intensity and pattern of scattered laser light are analysed to calculate the size and size distribution of aerosol droplets. As will be readily understood, the particle size distribution may be expressed in terms of d₁₀, d₅₀ and d₉₀, for example. Considering a cumulative plot of the volume of the particles measured by the laser diffraction technique, the d₁₀ particle size is the particle size below which 10% by volume of the sample lies. The d₅₀ particle size is the particle size below which 50% by volume of the sample lies. The d₉₀ particle size is the particle size below which 90% by volume of the sample lies. Unless otherwise indicated herein, the particle size measurements are volume-based particle size measurements, rather than number-based or mass-based particle size measurements.

The spread of particle size may be expressed in terms of the span, which is defined as (d₉₀-d₁₀)/d₅₀. Typically, the span is not more than 20, preferably not more than 10, preferably not more than 8, preferably not more than 4, preferably not more than 2, preferably not more than 1, or not more than 0.5.

The smoking substitute apparatus (or main body engaged with the smoking substitute apparatus) may comprise a power source. The power source may be electrically connected (or connectable) to a heater of the smoking substitute apparatus (e.g. when the smoking substitute apparatus is engaged with the main body). The power source may be a battery (e.g. a rechargeable battery). A connector in the form of e.g. a USB port may be provided for recharging this battery.

When the smoking substitute apparatus is in the form of a consumable, the smoking substitute apparatus may comprise an electrical interface for interfacing with a corresponding electrical interface of the main body. One or both of the electrical interfaces may include one or more electrical contacts. Thus, when the main body is engaged with the consumable, the electrical interface of the main body may be configured to transfer electrical power from the power source to a heater of the consumable via the electrical interface of the consumable.

The electrical interface of the smoking substitute apparatus may also be used to identify the smoking substitute apparatus (in the form of a consumable) from a list of known types. For example, the consumable may have a certain concentration of nicotine and the electrical interface may be used to identify this. The electrical interface may additionally or alternatively be used to identify when a consumable is connected to the main body.

Again, where the smoking substitute apparatus is in the form of a consumable, the main body may comprise an identification means, which may, for example, be in the form of an RFID reader, a barcode or QR code reader. This identification means may be able to identify a characteristic (e.g. a type) of a consumable engaged with the main body. In this respect, the consumable may include any one or more of an RFID chip, a barcode or QR code, or memory within which is an identifier and which can be interrogated via the identification means.

The smoking substitute apparatus or main body may comprise a controller, which may include a microprocessor. The controller may be configured to control the supply of power from the power source to the heater of the smoking substitute apparatus (e.g. via the electrical contacts). A memory may be provided and may be operatively connected to the controller. The memory may include non-volatile memory. The memory may include instructions which, when implemented, cause the controller to perform certain tasks or steps of a method.

The main body or smoking substitute apparatus may comprise a wireless interface, which may be configured to communicate wirelessly with another device, for example a mobile device, e.g. via Bluetooth^{®}. To this end, the wireless interface could include a Bluetooth^{®} antenna. Other wireless communication interfaces, e.g. WiFi^{®}, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supply to the heater of the consumable in response to a puff detection by the sensor. The control may be in the form of activation of the heater in response to a detected puff. That is, the smoking substitute apparatus may be configured to be activated when a puff is detected by the puff sensor. When the smoking substitute apparatus is in the form of a consumable, the puff sensor may be provided in the consumable or alternatively may be provided in the main body.

The term "flavourant" is used to describe a compound or combination of compounds that provide flavour and/or aroma. For example, the flavourant may be configured to interact with a sensory receptor of a user (such as an olfactory or taste receptor). The flavourant may include one or more volatile substances.

The flavourant may be provided in solid or liquid form. The flavourant may be natural or synthetic. For example, the flavourant may include menthol, liquorice, chocolate, fruit flavour (including e.g. citrus, cherry etc.), vanilla, spice (e.g. ginger, cinnamon) and tobacco flavour. The flavourant may be evenly dispersed or may be provided in isolated locations and/or varying concentrations.

The present inventors consider that a flow rate of 1.3 L min⁻¹ is towards the lower end of a typical user expectation of flow rate through a conventional cigarette and therefore through a user-acceptable smoking substitute apparatus. The present inventors further consider that a flow rate of 2.0 L min⁻¹ is towards the higher end of a typical user expectation of flow rate through a conventional cigarette and therefore through a user-acceptable smoking substitute apparatus. Embodiments of the present invention therefore provide an aerosol with advantageous particle size characteristics across a range of flow rates of air through the apparatus.

The aerosol may have a Dv50 of at least 1.1 µm, at least 1.2 µm, at least 1.3 µm, at least 1.4 µm, at least 1.5 µm, at least 1.6 µm, at least 1.7 µm, at least 1.8 µm, at least 1.9 µm or at least 2.0 µm.

The aerosol may have a Dv50 of not more than 4.9 µm, not more than 4.8 µm, not more than 4.7 µm, not more than 4.6 µm, not more than 4.5 µm, not more than 4.4 µm, not more than 4.3 µm, not more than 4.2 µm, not more than 4.1 µm, not more than 4.0 µm, not more than 3.9 µm, not more than 3.8 µm, not more than 3.7 µm, not more than 3.6 µm, not more than 3.5 µm, not more than 3.4 µm, not more than 3.3 µm, not more than 3.2 µm, not more than 3.1 µm or not more than 3.0 µm.

A particularly preferred range for Dv50 of the aerosol is in the range 2-3 µm.

The air inlet, flow passage, outlet and the vaporisation chamber may be configured so that, when the air flow rate inhaled by the user through the apparatus is 1.3 L min⁻¹, the average magnitude of velocity of air in the vaporisation chamber is in the range 0-1.3 ms⁻¹. The average magnitude velocity of air may be calculated based on knowledge of the geometry of the vaporisation chamber and the flow rate.

When the air flow rate inhaled by the user through the apparatus is 1.3 L min⁻¹, the average magnitude of velocity of air in the vaporisation chamber may be at least 0.001 ms⁻¹, or at least 0.005 ms⁻¹, or at least 0.01 ms⁻¹, or at least 0.05 ms⁻¹.

When the air flow rate inhaled by the user through the apparatus is 1.3 L min⁻¹, the average magnitude of velocity of air in the vaporisation chamber may be at most 1.2 ms⁻¹, at most 1.1 ms⁻¹, at most 1.0 ms⁻¹, at most 0.9 ms⁻¹, at most 0.8 ms⁻¹, at most 0.7 ms⁻¹ or at most 0.6 ms⁻¹.

The air inlet, flow passage, outlet and the vaporisation chamber may be configured so that, when the air flow rate inhaled by the user through the apparatus is 2.0 L min⁻¹, the average magnitude of velocity of air in the vaporisation chamber is in the range 0-1.3 ms⁻¹. The average magnitude velocity of air may be calculated based on knowledge of the geometry of the vaporisation chamber and the flow rate.

When the air flow rate inhaled by the user through the apparatus is 2.0 L min⁻¹, the average magnitude of velocity of air in the vaporisation chamber may be at least 0.001 ms⁻¹, or at least 0.005 ms⁻¹, or at least 0.01 ms⁻¹, or at least 0.05 ms⁻¹.

When the air flow rate inhaled by the user through the apparatus is 2.0 L min⁻¹, the average magnitude of velocity of air in the vaporisation chamber may be at most 1.2 ms⁻¹, at most 1.1 ms⁻¹, at most 1.0 ms⁻¹, at most 0.9 ms⁻¹, at most 0.8 ms⁻¹, at most 0.7 ms⁻¹ or at most 0.6 ms⁻¹.

When the calculated average magnitude of velocity of air in the vaporisation chamber is in the ranges specified, it is considered that the resultant aerosol particle size is advantageously controlled to be in a desirable range. It is further considered that the configuration of the apparatus can be selected so that the average magnitude of velocity of air in the vaporisation chamber can be brought within the ranges specified, at the exemplary flow rate of 1.3 L min⁻¹ and/or the exemplary flow rate of 2.0 L min⁻¹.

The aerosol generator may comprise a vaporiser element loaded with aerosol precursor, the vaporiser element being heatable by a heater and presenting a vaporiser element surface to air in the vaporisation chamber. A vaporiser element region may be defined as a volume extending outwardly from the vaporiser element surface to a distance of 1 mm from the vaporiser element surface.

The air inlet, flow passage, outlet and the vaporisation chamber may be configured so that, when the air flow rate inhaled by the user through the apparatus is 1.3 L min⁻¹, the average magnitude of velocity of air in the vaporiser element region is in the range 0-1.2 ms⁻¹. The average magnitude of velocity of air in the vaporiser element region may be calculated using computational fluid dynamics.

When the air flow rate inhaled by the user through the apparatus is 1.3 L min⁻¹, the average magnitude of velocity of air in the vaporiser element region may be at least 0.001 ms⁻¹, or at least 0.005 ms⁻¹, or at least 0.01 ms⁻¹, or at least 0.05 ms⁻¹.

When the air flow rate inhaled by the user through the apparatus is 1.3 L min⁻¹, the average magnitude of velocity of air in the vaporiser element region may be at most 1.1 ms⁻¹, at most 1.0 ms⁻¹, at most 0.9 ms⁻¹, at most 0.8 ms⁻¹, at most 0.7 ms⁻¹ or at most 0.6 ms⁻¹.

The air inlet, flow passage, outlet and the vaporisation chamber may be configured so that, when the air flow rate inhaled by the user through the apparatus is 2.0 L min⁻¹, the average magnitude of velocity of air in the vaporiser element region is in the range 0-1.2 ms⁻¹. The average magnitude of velocity of air in the vaporiser element region may be calculated using computational fluid dynamics.

When the air flow rate inhaled by the user through the apparatus is 2.0 L min⁻¹, the average magnitude of velocity of air in the vaporiser element region may be at least 0.001 ms⁻¹, or at least 0.005 ms⁻¹, or at least 0.01 ms⁻¹, or at least 0.05 ms⁻¹.

When the air flow rate inhaled by the user through the apparatus is 2.0 L min⁻¹, the average magnitude of velocity of air in the vaporiser element region may be at most 1.1 ms⁻¹, at most 1.0 ms⁻¹, at most 0.9 ms⁻¹, at most 0.8 ms⁻¹, at most 0.7 ms⁻¹ or at most 0.6 ms⁻¹.

When the average magnitude of velocity of air in the vaporiser element region is in the ranges specified, it is considered that the resultant aerosol particle size is advantageously controlled to be in a desirable range. It is further considered that the velocity of air in the vaporiser element region is more relevant to the resultant particle size characteristics than consideration of the velocity in the vaporisation chamber as a whole. This is in view of the significant effect of the velocity of air in the vaporiser element region on the cooling of the vapour emitted from the vaporiser element surface.

Additionally or alternatively is it relevant to consider the maximum magnitude of velocity of air in the vaporiser element region.

Therefore, the air inlet, flow passage, outlet and the vaporisation chamber may be configured so that, when the air flow rate inhaled by the user through the apparatus is 1.3 L min⁻¹, the maximum magnitude of velocity of air in the vaporiser element region is in the range 0-2.0 ms⁻¹.

When the air flow rate inhaled by the user through the apparatus is 1.3 L min⁻¹, the maximum magnitude of velocity of air in the vaporiser element region may be at least 0.001 ms⁻¹, or at least 0.005 ms⁻¹, or at least 0.01 ms⁻¹, or at least 0.05 ms⁻¹.

When the air flow rate inhaled by the user through the apparatus is 1.3 L min⁻¹, the maximum magnitude of velocity of air in the vaporiser element region may be at most 1.9 ms⁻¹, at most 1.8 ms⁻¹, at most 1.7 ms⁻¹, at most 1.6 ms⁻¹, at most 1.5 ms⁻¹, at most 1.4 ms⁻¹, at most 1.3 ms⁻¹ or at most 1.2 ms⁻¹.

The air inlet, flow passage, outlet and the vaporisation chamber may be configured so that, when the air flow rate inhaled by the user through the apparatus is 2.0 L min⁻¹, the maximum magnitude of velocity of air in the vaporiser element region is in the range 0-2.0 ms⁻¹.

When the air flow rate inhaled by the user through the apparatus is 2.0 L min⁻¹, the maximum magnitude of velocity of air in the vaporiser element region may be at least 0.001 ms⁻¹, or at least 0.005 ms⁻¹, or at least 0.01 ms⁻¹, or at least 0.05 ms⁻¹.

When the air flow rate inhaled by the user through the apparatus is 2.0 L min⁻¹, the maximum magnitude of velocity of air in the vaporiser element region may be at most 1.9 ms⁻¹, at most 1.8 ms⁻¹, at most 1.7 ms⁻¹, at most 1.6 ms⁻¹, at most 1.5 ms⁻¹, at most 1.4 ms⁻¹, at most 1.3 ms⁻¹ or at most 1.2 ms⁻¹.

It is considered that configuring the apparatus in a manner to permit such control of velocity of the airflow at the vaporiser permits the generation of aerosols with particularly advantageous particle size characteristics, including Dv50 values.

Additionally or alternatively is it relevant to consider the turbulence intensity in the vaporiser chamber in view of the effect of turbulence on the particle size of the generated aerosol. For example, the air inlet, flow passage, outlet and the vaporisation chamber may be configured so that, when the air flow rate inhaled by the user through the apparatus is 1.3 L min⁻¹, the turbulence intensity in the vaporiser element region is not more than 1%.

When the air flow rate inhaled by the user through the apparatus is 1.3 L min⁻¹, the turbulence intensity in the vaporiser element region may be not more than 0.95%, not more than 0.9%, not more than 0.85%, not more than 0.8%, not more than 0.75%, not more than 0.7%, not more than 0.65% or not more than 0.6%.

It is considered that configuring the apparatus in a manner to permit such control of the turbulence intensity in the vaporiser element region permits the generation of aerosols with particularly advantageous particle size characteristics, including Dv50 values.

Following detailed investigations, the inventors consider, without wishing to be bound by theory, that the particle size characteristics of the generated aerosol may be determined by the cooling rate experienced by the vapour after emission from the vaporiser element (e.g. wick). In particular, it appears that imposing a relatively slow cooling rate on the vapour has the effect of generating aerosols with a relatively large particle size. The parameters discussed above (velocity and turbulence intensity) are considered to be mechanisms for implementing a particular cooling dynamic to the vapour.

More generally, it is considered that the air inlet, flow passage, outlet and the vaporisation chamber may be configured so that a desired cooling rate is imposed on the vapour. The particular cooling rate to be used depends of course on the nature of the aerosol precursor and other conditions. However, for a particular aerosol precursor it is possible to define a set of testing conditions in order to define the cooling rate, and by extension this imposes limitations on the configuration of the apparatus to permit such cooling rates as are shown to result in advantageous aerosols. Accordingly, the air inlet, flow passage, outlet and the vaporisation chamber may be configured so that the cooling rate of the vapour is such that the time taken to cool to 50 °C is not less than 16 ms, when tested according to the following protocol. The aerosol precursor is an e-liquid consisting of 1.6% freebase nicotine and the remainder a 65:35 propylene glycol and vegetable glycerine mixture, the e-liquid having a boiling point of 209 °C. Air is drawn into the air inlet at a temperature of 25 °C. The vaporiser is operated to release a vapour of total particulate mass 5 mg over a 3 second duration from the vaporiser element surface in an air flow rate between the air inlet and outlet of 1.3 L min⁻¹.

Additionally or alternatively, the air inlet, flow passage, outlet and the vaporisation chamber may be configured so that the cooling rate of the vapour is such that the time taken to cool to 50 °C is not less than 16 ms, when tested according to the following protocol. The aerosol precursor is an e-liquid consisting of 1.6% freebase nicotine and the remainder a 65:35 propylene glycol and vegetable glycerine mixture, the e-liquid having a boiling point of 209 °C. Air is drawn into the air inlet at a temperature of 25 °C. The vaporiser is operated to release a vapour of total particulate mass 5 mg over a 3 second duration from the vaporiser element surface in an air flow rate between the air inlet and outlet of 2.0 L min⁻¹.

Cooling of the vapour such that the time taken to cool to 50 °C is not less than 16 ms corresponds to an equivalent linear cooling rate of not more than 10 °C/ms.

The equivalent linear cooling rate of the vapour to 50 °C may be not more than 9 °C/ms, not more than 8 °C/ms, not more than 7 °C/ms, not more than 6 °C/ms or not more than 5 °C/ms.

Cooling of the vapour such that the time taken to cool to 50 °C is not less than 32 ms corresponds to an equivalent linear cooling rate of not more than 5 °C/ms.

The testing protocol set out above considers the cooling of the vapour (and subsequent aerosol) to a temperature of 50 °C. This is a temperature which can be considered to be suitable for an aerosol to exit the apparatus for inhalation by a user without causing significant discomfort. It is also possible to consider cooling of the vapour (and subsequent aerosol) to a temperature of 75 °C. Although this temperature is possibly too high for comfortable inhalation, it is considered that the particle size characteristics of the aerosol are substantially settled by the time the aerosol cools to this temperature (and they may be settled at still higher temperature).

Accordingly, the air inlet, flow passage, outlet and the vaporisation chamber may be configured so that the cooling rate of the vapour is such that the time taken to cool to 75 °C is not less than 4.5 ms, when tested according to the following protocol. The aerosol precursor is an e-liquid consisting of 1.6% freebase nicotine and the remainder a 65:35 propylene glycol and vegetable glycerine mixture, the e-liquid having a boiling point of 209 °C. Air is drawn into the air inlet at a temperature of 25 °C. The vaporiser is operated to release a vapour of total particulate mass 5 mg over a 3 second duration from the vaporiser element surface in an air flow rate between the air inlet and outlet of 1.3 L min⁻¹.

Additionally or alternatively, the air inlet, flow passage, outlet and the vaporisation chamber may be configured so that the cooling rate of the vapour is such that the time taken to cool to 75 °C is not less than 4.5 ms, when tested according to the following protocol. The aerosol precursor is an e-liquid consisting of 1.6% freebase nicotine and the remainder a 65:35 propylene glycol and vegetable glycerine mixture, the e-liquid having a boiling point of 209 °C. Air is drawn into the air inlet at a temperature of 25 °C. The vaporiser is operated to release a vapour of total particulate mass 5 mg over a 3 second duration from the vaporiser element surface in an air flow rate between the air inlet and outlet of 2.0 L min⁻¹.

Cooling of the vapour such that the time taken to cool to 75 °C is not less than 4.5 ms corresponds to an equivalent linear cooling rate of not more than 30 °C/ms.

The equivalent linear cooling rate of the vapour to 75 °C may be not more than 29 °C/ms, not more than 28 °C/ms, not more than 27 °C/ms, not more than 26 °C/ms, not more than 25 °C/ms, not more than 24 °C/ms, not more than 23 °C/ms, not more than 22 °C/ms, not more than 21 °C/ms, not more than 20 °C/ms, not more than 19 °C/ms, not more than 18 °C/ms, not more than 17 °C/ms, not more than 16 °C/ms, not more than 15 °C/ms, not more than 14 °C/ms, not more than 13 °C/ms, not more than 12 °C/ms, not more than 11 °C/ms or not more than 10 °C/ms.

Cooling of the vapour such that the time taken to cool to 75 °C is not less than 13 ms corresponds to an equivalent linear cooling rate of not more than 10 °C/ms.

It is considered that configuring the apparatus in a manner to permit such control of the cooling rate of the vapour permits the generation of aerosols with particularly advantageous particle size characteristics, including Dv50 values.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1 illustrates a set of rectangular tubes for use in experiments to assess the effect of flow and cooling conditions at the wick on aerosol properties. Each tube has the same depth and length but different width.
Figure 2 shows a schematic perspective longitudinal cross sectional view of an example rectangular tube with a wick and heater coil installed.
Figure 3 shows a schematic transverse cross sectional view an example rectangular tube with a wick and heater coil installed. In this example, the internal width of the tube is 12 mm.
Figures 4A-4D show air flow streamlines in the four devices used in a turbulence study.
Figure 5 shows the experimental set up to investigate the influence of inflow air temperature on aerosol particle size, in order to investigate the effect of vapour cooling rate on aerosol generation.
Figure 6 shows a schematic longitudinal cross sectional view of a first smoking substitute apparatus (pod 1) used to assess influence of inflow air temperature on aerosol particle size.
Figure 7 shows a schematic longitudinal cross sectional view of a second smoking substitute apparatus (pod 2) used to assess influence of inflow air temperature on aerosol particle size.
Figure 8A shows a schematic longitudinal cross sectional view of a third smoking substitute apparatus (pod 3) used to assess influence of inflow air temperature on aerosol particle size. Figure 8B shows a schematic longitudinal cross sectional view of the same third smoking substitute apparatus (pod 3) in a direction orthogonal to the view taken in Figure 8A.
Figure 9 shows a plot of aerosol particle size (Dv50) experimental results against calculated air velocity.
Figure 10 shows a plot of aerosol particle size (Dv50) experimental results against the flow rate through the apparatus for a calculated air velocity of 1 m/s.
Figure 11 shows a plot of aerosol particle size (Dv50) experimental results against the average magnitude of the velocity in the vaporiser surface region, as obtained from CFD modelling.
Figure 12 shows a plot of aerosol particle size (Dv50) experimental results against the maximum magnitude of the velocity in the vaporiser surface region, as obtained from CFD modelling.
Figure 13 shows a plot of aerosol particle size (Dv50) experimental results against the turbulence intensity.
Figure 14 shows a plot of aerosol particle size (Dv50) experimental results dependent on the temperature of the air and the heating state of the apparatus.
Figure 15 shows a plot of aerosol particle size (Dv50) experimental results against vapour cooling rate to 50°C.
Figure 16 shows a plot of aerosol particle size (Dv50) experimental results against vapour cooling rate to 75°C.
Figure 17 is a schematic front view of a smoking substitute system, according to a first embodiment, in an engaged position;
Figure 18 is a schematic front view of the smoking substitute system of the first embodiment in a disengaged position;
Figure 19 is a schematic longitudinal cross sectional view of a smoking substitute apparatus of a first reference arrangement;
Figure 20 is an enlarged schematic cross sectional view of part of the air passage and vaporisation chamber of the first reference arrangement;
Figure 21 is a schematic longitudinal cut away view of a heat shielding arrangement of a smoking substitute apparatus according to an embodiment;
Figure 22 is a schematic plan view projection of a heater and a wick onto a heat-absorbing surface of a heat shield plate.
Figure 23 shows a pocket of the heat shielding arrangement of Figure 21, which holds a heat shield plate therein;
Figure 24 shows a further schematic longitudinal cross sectional view of the heat shielding arrangement of Figure 21, with a heat shield plate bent around a part of the enclosure of the smoking substitute apparatus;
Figure 25 shows a schematic cross sectional view of a smoking substitute apparatus of a second reference arrangement; and
Figure 26 shows a schematic cross sectional view of a smoking substitute apparatus of a third reference arrangement.

### Detailed Description of the Invention

Further background to the present invention and further aspects and embodiments of the present invention will now be discussed with reference to the accompanying figures. Further aspects and embodiments will be apparent to those skilled in the art. The contents of all documents mentioned in this text are incorporated herein by reference in their entirety.

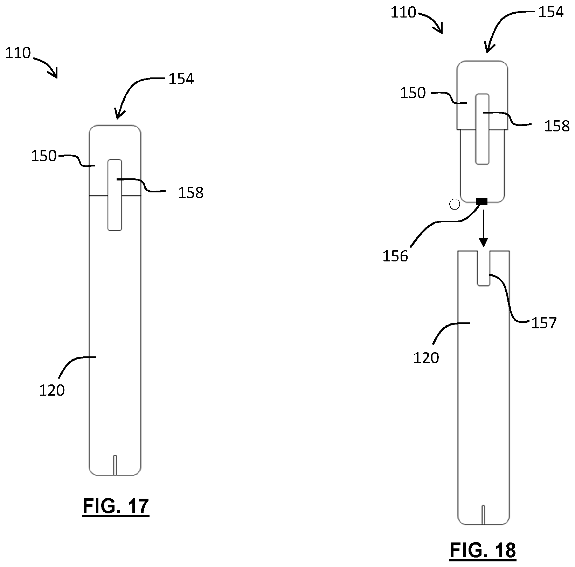

Figures 17 and 18 illustrate a smoking substitute system in the form of an e-cigarette system 110. The system 110 comprises a main body 120 of the system 110, and a smoking substitute apparatus in the form of an e-cigarette consumable (or "pod") 150. In the illustrated embodiment the consumable 150 (sometimes referred to herein as a smoking substitute apparatus) is removable from the main body 120, so as to be a replaceable component of the system 110. The e-cigarette system 110 is a closed system in the sense that it is not intended that the consumable should be refillable with e-liquid by a user.

As is apparent from Figures 17 and 18, the consumable 150 is configured to engage the main body 120. Figure 17 shows the main body 120 and the consumable 150 in an engaged state, whilst Figure 18 shows the main body 120 and the consumable 150 in a disengaged state. When engaged, a portion of the consumable 150 is received in a cavity of corresponding shape in the main body 120 and is retained in the engaged position by way of a snap-engagement mechanism. In other embodiments, the main body 120 and consumable 150 may be engaged by screwing one into (or onto) the other, or through a bayonet fitting, or by way of an interference fit.

The system 110 is configured to vaporise an aerosol precursor, which in the illustrated embodiment is in the form of a nicotine-based e-liquid 160. The e-liquid 160 comprises nicotine and a base liquid including propylene glycol and/or vegetable glycerine. In the present embodiment, the e-liquid 160 is flavoured by a flavourant. In other embodiments, the e-liquid 160 may be flavourless and thus may not include any added flavourant.

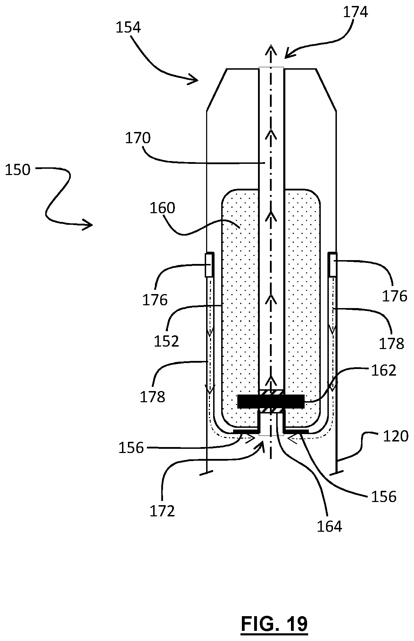

Figure 19 shows a schematic longitudinal cross sectional view of a first reference arrangement of the smoking substitute apparatus forming part of the smoking substitute system shown in Figures 17 and 18. In Figure 19, the e-liquid 160 is stored within a reservoir in the form of a tank 152 that forms part of the consumable 150. In the illustrated first reference arrangement, the consumable 150 is a "single-use" consumable 150. That is, upon exhausting the e-liquid 160 in the tank 152, the intention is that the user disposes of the entire consumable 150. The term "single-use" does not necessarily mean the consumable is designed to be disposed of after a single smoking session. Rather, it defines the consumable 150 is not arranged to be refilled after the e-liquid contained in the tank 152 is depleted. The tank may include a vent (not shown) to allow ingress of air to replace e-liquid that has been used from the tank. The consumable 150 preferably includes a window 158 (see Figures 17 and 18), so that the amount of e-liquid in the tank 152 can be visually assessed. The main body 120 includes a slot 157 so that the window 158 of the consumable 150 can be seen whilst the rest of the tank 152 is obscured from view when the consumable 150 is received in the cavity of the main body 120. The consumable 150 may be referred to as a "clearomizer" when it includes a window 158, or a "cartomizer" when it does not.

In some embodiments, the e-liquid (i.e. aerosol precursor) may be the only part of the system that is truly "single-use". That is, the tank may be refillable with e-liquid or the e-liquid may be stored in a non-consumable component of the system. For example, in such embodiments, the e-liquid may be stored in a tank located in the main body or stored in another component that is itself not single-use (e.g. a refillable cartomizer).

The external wall of tank 152 is provided by a casing of the consumable 150. The tank 152 annularly surrounds, and thus defines a portion of, a passage 170 that extends between a vaporiser inlet 172 and an outlet 174 at opposing ends of the consumable 150. In this respect, the passage 170 comprises an upstream end at the end of the consumable 150 that engages with the main body 120, and a downstream end at an opposing end of the consumable 150 that comprises a mouthpiece 154 of the system 110.

When the consumable 150 is received in the cavity of the main body 120 as shown in Figure 19, a plurality of device air inlets 176 are formed at the boundary between the casing of the consumable and the casing of the main body. The device air inlets 176 are in fluid communication with the vaporiser inlet 172 through an inlet flow channel 178 formed in the cavity of the main body which is of corresponding shape to receive a part of the consumable 150. Air from outside of the system 110 can therefore be drawn into the passage 170 through the device air inlets 176 and the inlet flow channels 178.

When the consumable 150 is engaged with the main body 120, a user can inhale (i.e. take a puff) via the mouthpiece 154 so as to draw air through the passage 170, and so as to form an airflow (indicated by the dashed arrows in Figure 19) in a direction from the vaporiser inlet 172 to the outlet 174. Although not illustrated, the passage 170 may be partially defined by a tube (e.g. a metal tube) extending through the consumable 150. In Figure 19, for simplicity, the passage 170 is shown with a substantially circular cross-sectional profile with a constant diameter along its length. In some embodiments, the passage may have other cross-sectional profiles, such as oval shaped or polygonal shaped profiles. Further, in other embodiments, the cross sectional profile and the diameter (or hydraulic diameter) of the passage may vary along its longitudinal axis.

The smoking substitute system 110 is configured to vaporise the e-liquid 160 for inhalation by a user. To provide this operability, the consumable 150 comprises a heater having a porous wick 162 and a resistive heating element in the form of a heating filament 164 that is helically wound (in the form of a coil) around a portion of the porous wick 162. The porous wick 162 extends across the passage 170 (i.e. transverse to a longitudinal axis of the passage 170 and thus also transverse to the air flow along the passage 170 during use) and opposing ends of the wick 162 extend into the tank 152 (so as to be immersed in the e-liquid 160). In this way, e-liquid 160 contained in the tank 152 is conveyed from the opposing ends of the porous wick 162 to a central portion of the porous wick 162 so as to be exposed to the airflow in the passage 170.

The helical filament 164 is wound about the exposed central portion of the porous wick 162 and is electrically connected to an electrical interface in the form of electrical contacts 156 mounted at the end of the consumable that is proximate the main body 120 (when the consumable and the main body are engaged). When the consumable 150 is engaged with the main body 120, electrical contacts 156 make contact with corresponding electrical contacts (not shown) of the main body 120. The main body electrical contacts are electrically connectable to a power source (not shown) of the main body 120, such that (in the engaged position) the filament 164 is electrically connectable to the power source. In this way, power can be supplied by the main body 120 to the filament 164 in order to heat the filament 164. This heats the porous wick 162 which causes e-liquid 160 conveyed by the porous wick 162 to vaporise and thus to be released from the porous wick 162. The vaporised e-liquid becomes entrained in the airflow and, as it cools in the airflow (between the heated wick and the outlet 174 of the passage 170), condenses to form an aerosol. This aerosol is then inhaled, via the mouthpiece 154, by a user of the system 110. As e-liquid is lost from the heated portion of the wick, further e-liquid is drawn along the wick from the tank to replace the e-liquid lost from the heated portion of the wick.

The filament 164 and the exposed central portion of the porous wick 162 are positioned across the passage 170. More specifically, the part of passage that contains the filament 164 and the exposed portion of the porous wick 162 forms a vaporisation chamber. In the illustrated example, the vaporisation chamber has the same cross-sectional diameter as the passage 170. However, in some embodiments the vaporisation chamber may have a different cross sectional profile compared with the passage 170. For example, the vaporisation chamber may have a larger cross sectional diameter than at least some of the downstream part of the passage 170 so as to enable a longer residence time for the air inside the vaporisation chamber.

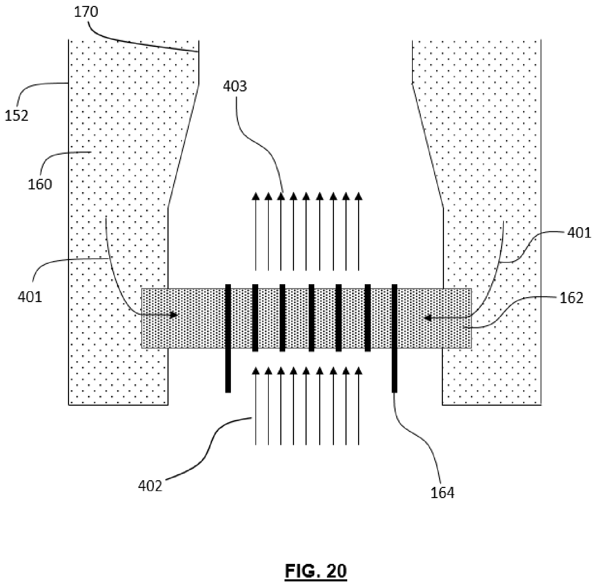

Figure 20 illustrates in more detail the vaporisation chamber and therefore the region of the consumable 150 around the wick 162 and filament 164. The helical filament 164 is wound around a central portion of the porous wick 162. The porous wick extends across passage 170. E-liquid 160 contained within the tank 152 is conveyed as illustrated schematically by arrows 401, i.e. from the tank and towards the central portion of the porous wick 162.

When the user inhales, air is drawn from through the inlets 176 shown in Figure 19, along inlet flow channel 178 to vaporisation chamber inlet 172 and into the vaporisation chamber containing porous wick 162. The porous wick 162 extends substantially transverse to the airflow direction. The airflow passes around the porous wick, at least a portion of the airflow substantially following the surface of the porous wick 162. In examples where the porous wick has a cylindrical cross-sectional profile, the airflow may follow a curved path around an outer periphery of the porous wick 162.

At substantially the same time as the airflow passes around the porous wick 162, the filament 164 is heated so as to vaporise the e-liquid which has been wicked into the porous wick. The airflow passing around the porous wick 162 picks up this vaporised e-liquid, and the vapour-containing airflow is drawn in direction 403 further down passage 170.

The power source of the main body 120 may be in the form of a battery (e.g. a rechargeable battery such as a lithium ion battery). The main body 120 may comprise a connector in the form of e.g. a USB port for recharging this battery. The main body 120 may also comprise a controller that controls the supply of power from the power source to the main body electrical contacts (and thus to the filament 164). That is, the controller may be configured to control a voltage applied across the main body electrical contacts, and thus the voltage applied across the filament 164. In this way, the filament 164 may only be heated under certain conditions (e.g. during a puff and/or only when the system is in an active state). In this respect, the main body 120 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

Although not shown, the main body 120 and consumable 150 may comprise a further interface which may, for example, be in the form of an RFID reader, a barcode or QR code reader. This interface may be able to identify a characteristic (e.g. a type) of a consumable 150 engaged with the main body 120. In this respect, the consumable 150 may include any one or more of an RFID chip, a barcode or QR code, or memory within which is an identifier and which can be interrogated via the interface.

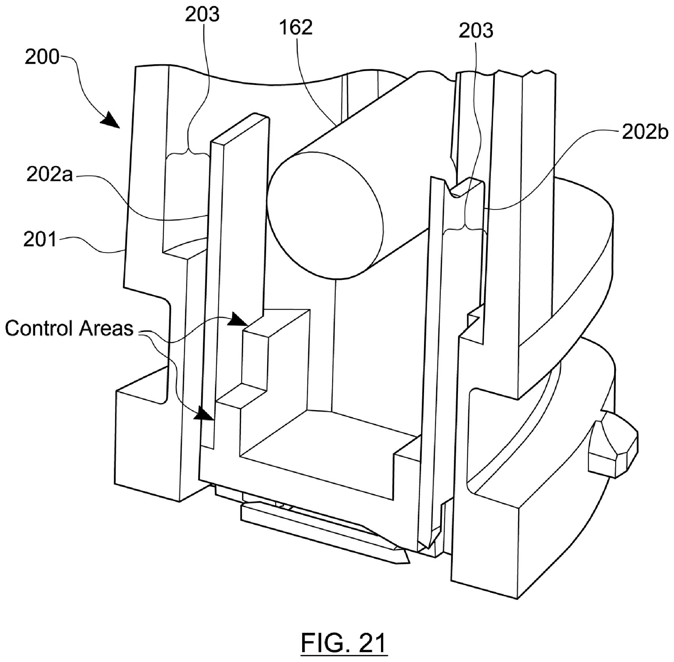

Figure 21 shows a schematic cut away view of a heat shielding arrangement 200 of a smoking substitute apparatus according to an embodiment of the invention. Components and parts of the apparatus that are common to the first reference arrangement of Figure 19 are referenced with the same number, and are not discussed further in view of this embodiment.

The heat shielding arrangement 200 includes an enclosure 201 formed primarily of a plastic material, which partially encloses the wick 162 and the heater 164 (not shown but referenced with the same number as the heater of the first reference arrangement) which is wound around the wick 162, preferably in a helical manner. Between the heater 164 and the plastic enclosure 201 are two heat shield plates 202a, 202b disposed on opposing sides of the heater 164. The plates 202a, 202b are made of a material which has a thermal degradation temperature significantly higher than that of the plastic material which forms the enclosure 201. In this disclosure, the term "thermal degradation temperature" is used to describe the lowest temperature at which a material undergoes melting, softening, corrosion, spalling or combustion. The plates 202a, 202b are thus preferably made of a metal, ceramic, thermosetting polymer, or a composite thereof, and preferably have a thermal degradation temperature which is at least 100°C higher than that of the plastic enclosure material.

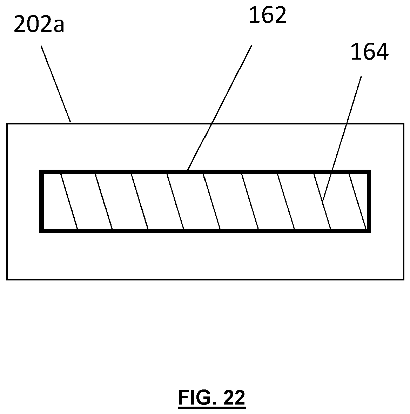

The superior thermal degradation properties of the plates 202a, 202b allow them to protect the plastic enclosure 201 from excessive heating by the heater 164. Specifically, when heat energy radiates from the heater 164 towards the enclosure 201, a significant portion of the heat energy is intercepted and absorbed by the plates 202a, 202b, reducing the amount of heat energy available to heat the plastic material of the enclosure 201. This reduces the risk of the enclosure 201 reaching a temperature which would cause thermal degradation of the plastic material. Therefore, the enclosure 201 is less likely to deform due to heating and alter the intended air flow through the apparatus, and there is a reduced risk of harmful plastic matter becoming entrained in the air flow and into the lungs of the user, for example due to melting of the enclosure 201. The heat shield plates 202a, 202b thus allows the enclosure 201 and the heater 164 to be placed closer together than a corresponding case in which the plates are absent, making the apparatus compact and easy to handle. To better facilitate the interception and absorption of the heat radiating from the heater 164 by the plates, each plate 202a, 202b in the present embodiment presents to the heater 164 a heat-absorbing surface having an area of at least twice as large as a plan view projection of the heater onto the respective plate. This concept is illustrated schematically in Figure 22, which shows a plan view projection of the heater 164 and the wick 162 onto a heat-absorbing surface of plate 202a. It is clear from Figure 22 that the area of the heat-absorbing surface of plate 202a is at least twice as large as the plan view projection of the heater 164 onto the surface. In the present embodiment, the heat-absorbing surface of each heat shield plate 202a, 202b is also at least 20 mm², but may be at least 30 mm², or at least 40 mm².

A further feature of the heat shielding arrangement 200 is the inclusion of a heat insulating gap 203 between each heat shield plate 202a, 202b and the plastic enclosure 201, the gap 203 having a thickness of at least 0.5 mm. This gap reduces the ability of each heat shield plate 202a, 202b to transfer heat to the enclosure 201 via thermal conduction, which reduces the risk of thermal degradation of the enclosure 201. Each heat shield 202a, 202b is in contact with the enclosure 201 via respective contact portions of the plates 202a, 202b. Preferably, the contact portion of each plate 202a, 202b has a surface area smaller than one quarter, or not greater than one fifth, of a total surface area of the plates 202a, 202b, so as to limit thermal conduction between the plates 202a, 202b and the enclosure 201.

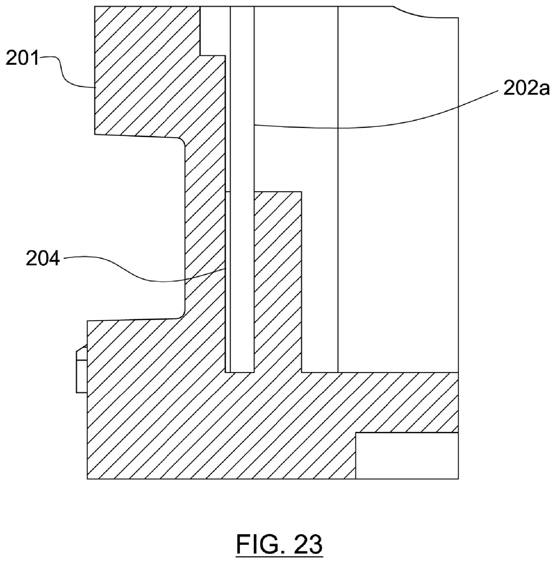

The contact portion of plate 202a includes an end part of the plate 202a. This end part is held in a pocket 204 defined by the enclosure 201, the contact portion of the plate 202a contacting the enclosure 201 via the pocket 204. This configuration, shown more clearly in Figure 23, allows the remainder of the plate 202a to extend from the pocket to a position closer to the heater 164 such that the remainder of the plate 202a has no contact with the enclosure 201. This is beneficial as it ensures that the end part absorbs less heat energy than the remainder of the plate 202a, thus reducing the heat energy available to thermally conduct through the contact portion of the plate 202a to the enclosure 201.

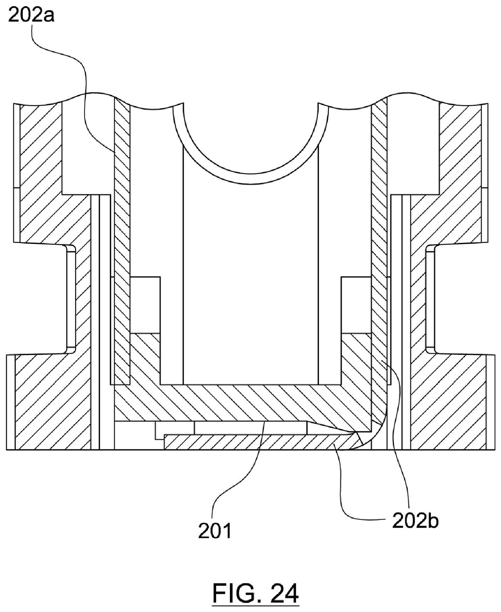

The plate 202b is fitted to the enclosure 201 by being bent by about an angle of 90° around a base portion of the enclosure 201, as shown most clearly in Figure 24. This arrangement serves two purposes. Firstly, it reduces the potential for relative movement between the plate 202b and the enclosure 201. Secondly, it locates the plate 202b at the base of the apparatus. In the present embodiment, the plate 202b is made of an electrically conductive material. Thus, the part of the plate 202b which is located at the base of the apparatus acts as an electrical contact which can engage with a power supply, and the remainder of the plate 202b electrically connects the contact to the heater, such that a power supply engaged with the contact may power the heater. The power supply may be provided in the main body of the smoking substitute system, or may be located at the base of the apparatus. Alternatively, the power supply may be completely external to the system.

The contact portion of plate 202b is in a region of the plate 202b which is distal to the heater. The distal region in use absorbs less heat energy from the heater 164 than a region of the plate which is proximal to the heater. Therefore, during or after use, the heat shield conducts less heat energy to the enclosure 201 than would be the case if the contact portion were in the proximal region of the plate 202b.

In other embodiments, there may be provided a single heat shield extending fully or partially around the heater. Such a heat shield may have any one or a combination of the features described in relation to either of plates 202a and 202b.

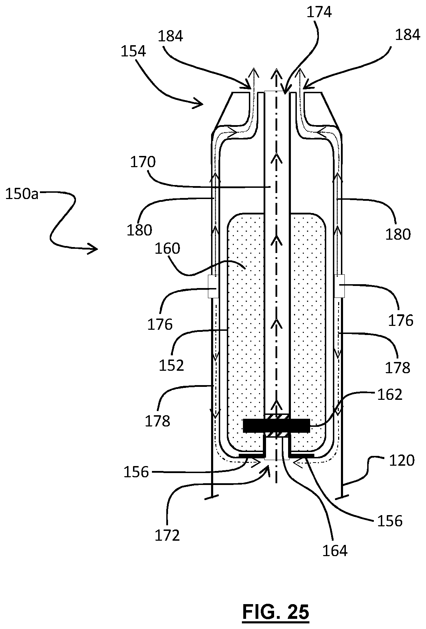

In some embodiments, the apparatus may include one or a combination of features of a second reference arrangement (and variations thereof), shown schematically in Figure 25, where such features are combinable with the present invention. This second reference arrangement is described below.

Figure 25 illustrates a schematic longitudinal cross sectional view of a second reference arrangement of the smoking substitute apparatus forming part of the smoking substitute system shown in Figures 17 and 18. The arrangement illustrated in Figure 25 differs from the first reference arrangement illustrated in Figure 19 in that the substitute smoking apparatus includes two bypass passages 180 in addition to the vaporiser passage 170. The bypass air passages extend between the plurality of device air inlets 176 and two outlets 184. In other variations of the second reference arrangement, the number of bypass passages 180 and corresponding outlets 184 may be greater or smaller than in the illustrated example. Furthermore, there may be more or fewer air inlets and there may be more or fewer outlets.

In Figure 25, for simplicity, the bypass passage 180 is shown with a substantially circular cross-sectional profile with a constant diameter along its length. In some variations of the second reference arrangement, the bypass passage 180 may have other cross-sectional profiles, such as oval shaped or polygonal shaped profiles. Further, in some variations of the second reference arrangement, the cross sectional profile and the diameter (or hydraulic diameter) of the bypass passage 180 may vary along its longitudinal axis.

The provision of a bypass passage 180 means that a part of the air drawn through the smoking substitute apparatus 150a when a user inhales via the mouthpiece 154 is not drawn through the vaporisation chamber. This has the effect of reducing the flow rate through the vaporisation chamber in correspondence with the respective flow resistances presented by the vaporiser passage 170 and the bypass passage 180. This can reduce the correlation between the flow rate through the smoking substitute apparatus 150a (i.e. the user's draw rate) and the particle size generated when the e-liquid 160 is vaporised and subsequently forms an aerosol. Therefore, the smoking substitute apparatus 150a of the second reference arrangement can deliver a more consistent aerosol to a user.

Furthermore, the smoking substitute apparatus 150a of the second reference arrangement is capable of producing an increased particle droplet size, d₅₀, based on typical inhalation rates undertaken by a user, compared to the first reference arrangement of Fig. 19. Such larger droplet sizes may be beneficial for the delivery of vapour to a user's lungs. The preferred ratio between the dimensions of the bypass passage 180 and the dimensions of the vaporiser passage 170, and hence flow rate in the respective passages may be determined from representative user inhalation rates and from the required air flow rate through the vaporisation chamber to deliver a desired droplet size. For example, an average total flow rate of 1.3 litres per minute may be split such that 0.8 litres per minute passes through the bypass air channel 180, and 0.5 litres per minute passes through the vaporiser channel 170, a bypass:vaporiser flow rate ratio of 1.6:1. Such a flow rate may provide a droplet size, d₅₀, of 1-3 µm (more preferably 2-3 µm) with a span of not more than 20 (preferably not more than 10). Alternative flow rate ratios may be provided based on calculations and measurements of user flow rate, vaporiser flow rate, and average droplet size d₅₀. A bypass:vaporiser flow rate ratio of between 0.5:1 and 20:1, typically at an average total flow rate of 1.3 litres per minute may be advantageous depending on the configuration of the smoking substitute apparatus.

The bypass passage and vaporiser passage extend from a common device inlet 176. This has the benefit of ensuring more consistent airflow through the bypass passage 180 and vaporiser passage 170 across the lifetime of the smoking substitute apparatus 150a, since any obstruction that impinges on an air inlet 176 will affect the airflow through both passages equally. The impact of inlet manufacturing variations can also be reduced for the same reason. This can therefore improve the user experience for the smoking substitute apparatus 150a. Furthermore, the provision of a common device inlet 176 simplifies the construction and external appearance of the device.

The bypass passage 180 and vaporiser passage 170 separate upstream of the vaporisation chamber. Therefore, no vapour is drawn through the bypass passage 180. Furthermore, because the bypass passage leads to outlet 184 that is separate from outlet 174 of the vaporiser passage, substantially no mixing of the bypass air and vaporiser air occurs within the smoking substitute apparatus 150a. Such mixing could otherwise lead to excessive cooling of the vapour and hence a build-up of condensation within the smoking substitute apparatus 150a. Such condensation could have adverse implications for delivering vapour to the user, for example by causing the user to draw liquid droplets rather than vapour when "puffing" on the mouthpiece 154.

In embodiments in which one or a combination of the features of the second reference arrangement of Figure 25 are incorporated, the heat shield plates 202a, 202b, or a single heat shield, are particularly advantageous. For example, the provision of a bypass passage 180 reduces air flow over the heater. Given that air flow over the heater 164 transports heat energy away from the heater and the enclosure 201, reducing the air flow decreases the excess heat energy which is transported away from the enclosure 201. Thus, in such cases, the heat shield plates are particularly beneficial in protecting the enclosure 201 from high levels of excess heat energy which are not transported away by an air flow over the heater 164.

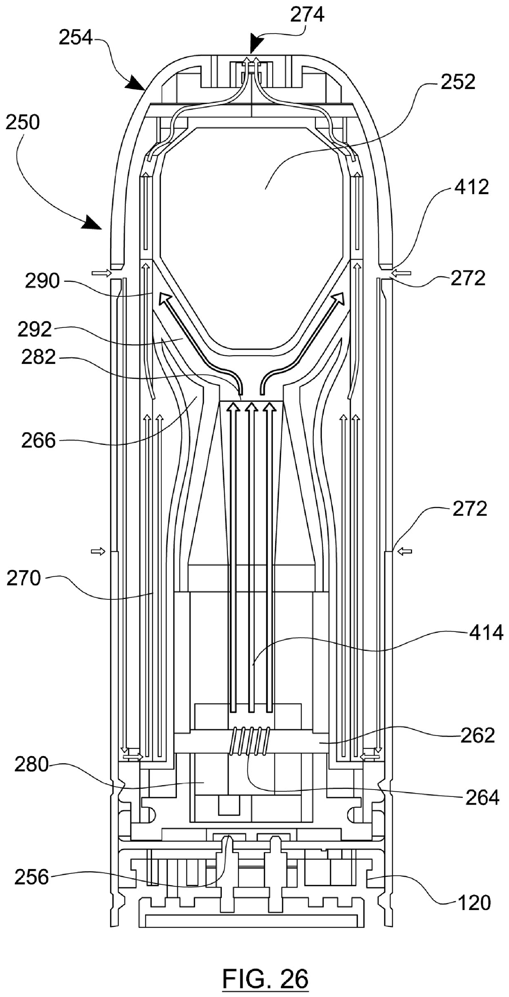

In other embodiments, the apparatus may include one or a combination of features of a third reference arrangement (and variations thereof), shown schematically in Figure 26, where such features are combinable with the present invention. This third reference arrangement is described below.

Figure 26 illustrates a longitudinal cross sectional view of a consumable 250 according to a third reference arrangement. In Figure 26, the consumable 250 is shown attached, at a first end of the consumable 250, to the main body 120 of Figure 17 and Figure 18. More specifically, the consumable 250 is configured to engage and disengage with the main body 120 and is interchangeable with the first reference arrangement 150 as shown in Figures 19 and 20. Furthermore, the consumable 250 is configured to interact with the main body 120 in the same manner as the first reference arrangement 150 and the user may operate the consumable 250 in the same manner as the first reference arrangement 150.

The consumable 250 comprises a housing. The consumable 250 comprises an aerosol generation chamber 280 in the housing. As shown in Figure 26, an aerosol generation chamber 280 takes the form of an open ended container, or a cup, with a single chamber outlet 282 opened towards an outlet 274 of the consumable 250.

In the illustrated third reference arrangement, the housing has a plurality of air inlets 272 defined or opened at the sidewall of the housing. An outlet 274 is defined or opened at a second end of the consumable 250 that comprises a mouthpiece 254. A pair of passages 270 each extend between the respective air inlets 272 and the outlet 274 to provide flow passage for an air flow 412 as a user puffs on the mouthpiece 254. The chamber outlet 282 is configured to be in fluid communication with the passages 270. The passages 270 extend from the air inlets 272 towards the first end of the consumable 250 before routing back to towards the outlet 274 at the second end of the consumable 250. That is, a portion of each of the passages 270 axially extends alongside the aerosol generation chamber 280. The path of the air flow path 412 is illustrated in Figure 26. In other variations of the third reference arrangement, the passages 270 may extend from the air inlet 272 directly to the outlet 274 without routing towards the first end of consumable 250, e.g. the passages 270 may not axially extend alongside the aerosol generation chamber 280.

In some other variations of the third reference arrangement, the housing may not be provided with any air inlet for an air flow to enter the housing. For example, the chamber outlet may be directly connected to the outlet of the housing by an aerosol passage and therefore said aerosol passage may only convey aerosol as generated in the aerosol generation chamber. In these variations, the discharge of aerosol may be driven at least in part by the pressure increase during vaporisation of aerosol form.

Referring back to the third reference arrangement of Figure 26, the chamber outlet 282 is positioned downstream from the heater in the direction of the vapour and/or aerosol flow 414 and serves as the only gas flow passage to the internal volume of the aerosol generation chamber 280. In other words, the aerosol generation chamber 280 is sealed against air flow except for having the chamber outlet 282 in communication with the passages 270, the chamber outlet 282 permitting, in use, aerosol generated by the heater to be entrained into an air flow along the passage 270. In some other variations of the third reference arrangement, the sealed aerosol generation chamber 280 may comprise a plurality of chamber outlets 282 each arranged in fluid commutation with the passages 270. In the illustrated third reference arrangement, the aerosol generation chamber 280 does not comprise any aperture upstream of the heater that may serve as an air flow inlet (although in some arrangements a vent may be provided). In contrast with the consumable 150 as shown in Figures 19 and 20, the passages 270 of the consumable 250 allow the air flow, e.g. an entire amount of air flow, entering the housing to bypass the aerosol generation chamber 280. Such arrangement allows aerosol precursor to be vaporised in absence of the air flow. Therefore, the aerosol generation chamber may be considered to be a "stagnant" chamber. For example, the volumetric flowrate of vapour and/or aerosol in the aerosol generation chamber is configured to be less than 0.1 litre per minute. The vaporised aerosol precursor may cool and therefore condense to form an aerosol in the aerosol generation chamber 280, which is subsequently expulsed into or entrained with the air flow in passages 270. In addition, a portion of the vaporised aerosol precursor may remain as a vapour before leaving the aerosol generation chamber 280, and subsequently forms an aerosol as it is cooled by the air flow in the passages 270. The flow path of the vapour and/or aerosol 414 is illustrated in Figure 26.

In the illustrated third reference arrangement, the chamber outlet 282 is configured to be in fluid communication with a junction 290 at each of the passages 270 through a respective vapour channel 292. The junctions 290 merge the vapour channels 292 with their respective passages 270 such that vapour and/or aerosol formed in the aerosol generation chamber 280 may expand or entrain into the passages 270 through junction inlets of said junctions 290. The vapour channels form a buffering volume to minimise the amount of air flow that may back flow into the aerosol generation chamber 280. In some other variations of the third reference arrangement (not illustrated), the chamber outlet 282 may directly open towards the junction 290 at the passage, and therefore in such variations the vapour channel 292 may be omitted.

In some variations of the third reference arrangement (not illustrated), the chamber outlet may be closed by a one way valve. Said one way valve may be configured to allow a one way flow passage for the vapour and/or aerosol to be discharged from the aerosol generation chamber, and to reduce or prevent the air flow in the passages from entering the aerosol generation chamber.

In the illustrated third reference arrangement, the aerosol generation chamber 280 is configured to have a length of 20mm and a volume of 680mm³. The aerosol generation chamber is configured to allow vapour to be expulsed through the chamber outlet at a rate greater than 0.1mg/second. In other variations of the third reference arrangement, the aerosol generation chamber may be configured to have an internal volume ranging between 68mm³ to 680mm³, wherein the length of the aerosol generation chamber may range between 2mm to 20mm.

As shown in Figure 26, a part of each of the passages 270 axially extends alongside the aerosol generation chamber 280. For example, the passages 270 are formed between the aerosol generation chamber 280 and the housing. Such an arrangement reduces heat transfer from the aerosol generation chamber 280 to the external surfaces of the housing.

The aerosol generation chamber 280 comprises a heater extending across its width. The heater comprises a porous wick 262 and a heating filament 264 helically wound around a portion of the porous wick 162. A tank 252 is provided in the space between the aerosol generation chamber 280 and the outlet 274, the tank being for storing a reservoir of aerosol precursor. Therefore in contrast with the first reference arrangement as shown in Figures 19 and 20, the tank 252 in this third reference arrangement does not substantially surround the aerosol generation chamber nor the passage 270. Instead, as shown in Figure 26, the tank is substantially positioned above the aerosol generation chamber 280 and the porous wick 262 when the consumable 250 is placed in an upright orientation during use. The end portions of the porous wick 262 each extend through the sidewalls of the aerosol generation chamber 280 and into a respective liquid conduit 266 which is in fluid communication with the tank 252. The wick 262, saturated with aerosol precursor, may prevent gas flow passage into the liquid conduits 266 and the tank 252. Such an arrangement may allow the aerosol precursor stored in the tank 252 to convey towards the porous wick 262 through the liquid conduits 266 by gravity. The liquid conduits 266 are configured to have a hydraulic diameter that allow a controlled amount of aerosol precursor to flow from the tank 252 towards the porous wick 262. More specifically, the size of liquid conduits 266 are selected based on the rate of aerosol precursor consumption during vaporisation. For example, the liquid conduits 266 are sized to allow a sufficient amount of aerosol precursor to flow towards and replenish the wick, yet not so large as to cause excessive aerosol precursor to leak into the aerosol generation chamber. The liquid conduits 266 are configured to have a hydraulic diameter ranging from 0.01mm to 10mm or 0.01mm to 5mm. Preferably, the liquid conduits 266 are configured to have a hydraulic diameter in the range of 0.1mm to 1mm.

The heating filament is electrically connected to electrical contacts 256 at the base of the aerosol generation chamber 280, sealed to prevent air ingress or fluid leakage. As shown in Figure 26, when the first end of the consumable 250 is received into the main body 120, the electrical contacts 256 establish electrical communication with corresponding electrical contacts of the main body 120, and thereby allow the heater to be energised.

The vaporised aerosol precursor, or aerosol in the condensed form, may discharge from the aerosol generation chamber 280 based on pressure difference between the aerosol generation chamber 280 and the passages 270. Such pressure difference may arise form i) an increased pressure in the aerosol generation chamber 280 during vaporisation of aerosol form, and/or ii) a reduced pressure in the passage during a puff.

For example, when the heater is energised and forms a vapour, it expands in to the stagnant cavity of the aerosol generation chamber 280 and thereby causes an increase in internal pressure therein. The vaporised aerosol precursor may immediately begin to cool and may form aerosol droplets. Such increase in internal pressure causes convection inside the aerosol generation chamber which aids expulsing aerosol through the chamber outlet 282 and into the passages 270.

In the illustrated third reference arrangement, the heater is positioned within the stagnant cavity of the aerosol generation chamber 280, e.g. the heater is spaced from the chamber outlet 282. Such arrangement may reduce or prevent the amount of air flow entering the aerosol generation chamber, and therefore it may minimise the amount of turbulence in the vicinity of the heater. Furthermore, such arrangement may increase the residence time of vapour in the stagnant aerosol generation chamber 280, and thereby may result in the formation of larger aerosol droplets. In some other variations of the third reference arrangement, the heater may be positioned adjacent to the chamber outlet and therefore that the path of vapour 414 from the heater to the chamber outlet 282 is shortened. This may allow vapour to be drawn into or entrained with the air flow in a more efficient manner.

The junction inlet at each of the junctions 290 opens in a direction orthogonal or non-parallel to the air flow. That is, the junction inlet each opens at a sidewall of the respective passages 270. This allows the vapour and/or aerosol from the aerosol generation chamber 280 to entrain into the air flow at an angle, and thus improving localised mixing of the different streams, as well as encouraging aerosol formation. The aerosol may be fully formed in the air flow and be drawn out through the outlet at the mouthpiece.

With the absence of, or much reduced, air flow in the aerosol generation chamber, the aerosol as generated by the illustrated third reference arrangement has a median droplet size d₅₀ of at least 1µm. More preferably, the aerosol as generated by the illustrated third reference arrangement has a median droplet size d₅₀ ranging between 2µm to 3µm.

In embodiments in which one or a combination of the features of the third reference arrangement of Figure 26 are incorporated, the heat shield plates 202a, 202b, or a single heat shield, are particularly advantageous. For example, the provision of a "stagnant" chamber almost completely eliminates air flow over the heater. Given that air flow over the heater 164 transports heat energy away from the heater and the enclosure 201, eliminating the air flow decreases the excess heat energy which is transported away from the enclosure 201. Thus, in such cases, the heat shield plates 202a, 202b are particularly beneficial in protecting the enclosure 201 from high levels of excess heat energy which are not transported away by the air flow.

There now follows a disclosure of certain experimental work undertaken to determine the effects of certain conditions in the smoking substitute apparatus on the particle size of the generated aerosol.

The experimental results reported here are relevant to the embodiments disclosed above in view of their demonstration of the control over particle size based on control of the conditions at the wick. In particular, the embodiments disclosed above have an effect on the temperature in the vaporisation chamber, in view of the effect of the heat shield and/or the provision of bypass airflow.

### 1. Introduction

Aerosol droplet size is a considered to be an important characteristic for smoking substitution devices. Droplets in the range of 2-5 µm are preferred in order to achieve improved nicotine delivery efficiency and to minimise the hazard of second-hand smoking. However, at the time of writing (September 2019), commercial EVP devices typically deliver aerosols with droplet size averaged around 0.5 µm, and to the knowledge of the inventors not a single commercially available device can deliver an aerosol with an average particle size exceeding 1 µm.

The present inventors speculate, without themselves wishing to be bound by theory, that there has to date been a lack of understanding in the mechanisms of e-liquid evaporation, nucleation and droplet growth in the context of aerosol generation in smoking substitute devices. The present inventors have therefore studied these issues in order to provide insight into mechanisms for the generation of aerosols with larger particles. The present inventors have carried out experimental and modelling work alongside theoretical investigations, leading to significant achievements as now reported.

This disclosure considers the roles of air velocity, air turbulence and vapour cooling rate in affecting aerosol particle size.

### 2. Experiments

In this work, a Malvern PANalytical Spraytec laser diffraction system was employed for the particle size measurement. In order to limit the number of variables, the same coil and wick (1.5 ohms Ni-Cr coil, 1.8 mm Y07 cotton wick), the same e-liquid (1.6% freebase nicotine, 65:35 propylene glycol (PG)/vegetable glycerine (VG) ratio, no added flavour) and the same input power (10W) were used in all experiments. Y07 represents the grade of cotton wick, meaning that the cotton has a linear density of 0.7 grams per meter.

Particle sizes were measured in accordance with ISO 13320:2009(E), which is an international standard on laser diffraction methods for particle size analysis. This is particularly well suited to aerosols, because there is an assumption in this standard that the particles are spherical (which is a good assumption for liquid-based aerosols). The standard is stated to be suitable for particle sizes in the range 0.1 micron to 3 mm.

The results presented here concentrate on the volume-based median particle size Dv50. This is to be taken to be the same as the parameter d₅₀ used above.

### 2.1. Rectangular tube testing

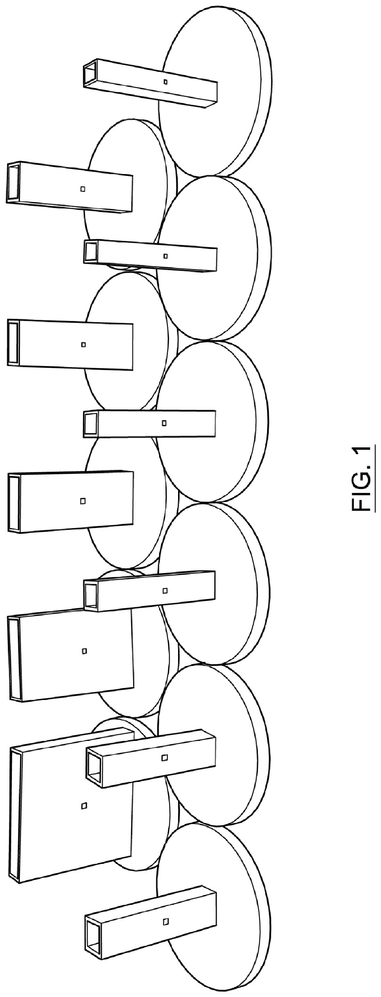

The work reported here based on the inventors' insight that aerosol particle size might be related to: 1) air velocity; 2) flow rate; and 3) Reynolds number. In a given EVP device, these three parameters are interlinked to each other, making it difficult to draw conclusions on the roles of each individual factor. In order to decouple these factors, experiments were carried out using a set of rectangular tubes having different dimensions. These were manufactured by 3D printing. The rectangular tubes were 3D printed in an MJP 2500 3D printer. Figure 1 illustrates the set of rectangular tubes. Each tube has the same depth and length but different width. Each tube has an integral end plate in order to provide a seal against air flow outside the tube. Each tube also has holes formed in opposing side walls in order to accommodate a wick.

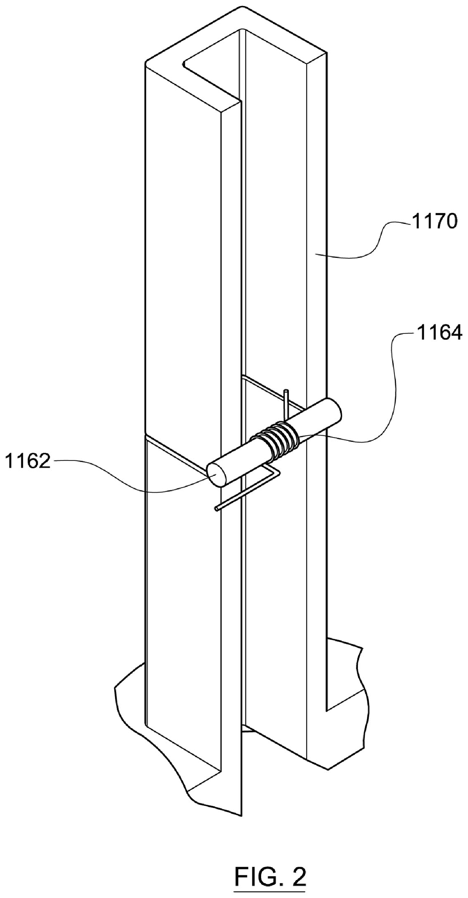

Figure 2 shows a schematic perspective longitudinal cross sectional view of an example rectangular tube 1170 with a wick 1162 and heater coil 1164 installed. The location of the wick is about half way along the length of the tube. This is intended to allow the flow of air along the tube to settle before reaching the wick.

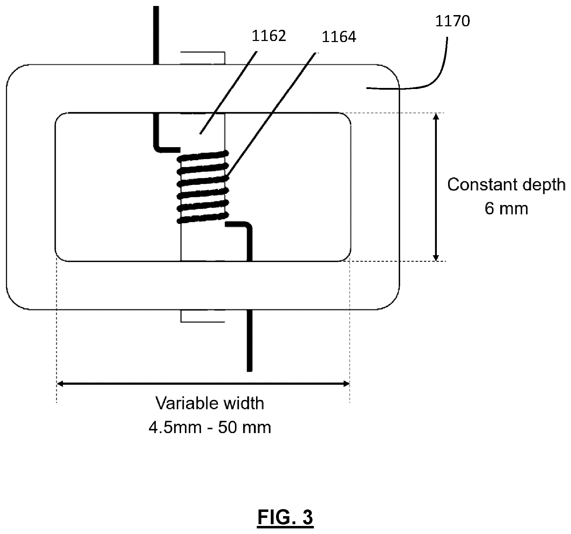

Figure 3 shows a schematic transverse cross sectional view an example rectangular tube 1170 with a wick 1162 and heater coil 1164 installed. In this example, the internal width of the tube is 12 mm
The rectangular tubes were manufactured to have same internal depth of 6 mm in order to accommodate the standardized coil and wick, however the tube internal width varied from 4.5 mm to 50 mm. In this disclosure, the "tube size" is referred to as the internal width of rectangular tubes.

The rectangular tubes with different dimensions were used to generate aerosols that were tested for particle size in a Malvern PANalytical Spraytec laser diffraction system. An external digital power supply was dialled to 2.6A constant current to supply 10W power to the heater coil in all experiments. Between two runs, the wick was saturated manually by applying one drop of e-liquid on each side of the wick.

Three groups of experiments were carried out in this study:
1. 1.3 Ipm (litres per minute, L min⁻¹ or LPM) constant flow rate on different size tubes
2. 2.0 Ipm constant flow rate on different size tubes
3. 1 m/s constant air velocity on 3 tubes: i) 5mm tube at 1.4 Ipm flow rate; ii) 8mm tube at 2.8 Ipm flow rate; and iii) 20mm tube at 8.6 Ipm flow rate.

Table 1 shows a list of experiments in this study. The values in "calculated air velocity" column were obtained by simply dividing the flow rate by the intersection area at the centre plane of wick. Reynolds numbers (Re) were calculated through the following equation: $Re = \frac{ρvL}{μ}$ where: *ρ* is the density of air (1.225 kg/m³); *v* is the calculated air velocity in table 1; *µ* is the viscosity of air (1.48 × 10⁻⁵ m²/s); *L* is the characteristic length calculated by: $L = \frac{4 P}{A}$ where: P is the perimeter of the flow path's intersection, and A is the area of the flow path's intersection.

**Table 1. List of experiments in the rectangular tube study**

| | **Tube size [mm]** | **Flow rate [lpm]** | **Reynolds number** | **Calculated air velocity [m/s]** |
|---|---|---|---|---|
| 1.3 Ipm constant flow rate | 4.5 | 1.3 | 153 | 1.17 |
| | 6 | 1.3 | 142 | 0.71 |
| | 7 | 1.3 | 136 | 0.56 |
| | 8 | 1.3 | 130 | 0.47 |
| | 10 | 1.3 | 120 | 0.35 |
| | 12 | 1.3 | 111 | 0.28 |
| | 20 | 1.3 | 86 | 0.15 |
| | 50 | 1.3 | 47 | 0.06 |
| 2.0 Ipm constant flow rate | 4.5 | 2.0 | 236 | 1.81 |
| | 5 | 2.0 | 230 | 1.48 |
| | 6 | 2.0 | 219 | 1.09 |
| | 8 | 2.0 | 200 | 0.72 |
| | 12 | 2.0 | 171 | 0.42 |
| | 20 | 2.0 | 132 | 0.23 |
| | 50 | 2.0 | 72 | 0.09 |
| 1.0 m/s constant air velocity | 5.0 | 1.4 | 155 | 1.00 |
| | 8 | 2.8 | 279 | 1.00 |
| | 20 | 8.6 | 566 | 1.00 |

Five repetition runs were carried out for each tube size and flow rate combination. Between adjacent runs there were at least 5 minutes wait time for the Spraytec system to be purged. In each run, real time particle size distributions were measured in the Spraytec laser diffraction system at a sampling rate of 2500 per second, the volume distribution median (Dv50) was averaged over a puff duration of 4 seconds. Measurement results were averaged and the standard deviations were calculated to indicate errors as shown in section 4 below.

### 2.2. Turbulence tube testing

The Reynolds numbers in Table 1 are all well below 1000, therefore, it is considered fair to assume all the experiments in section 2.1 would be under conditions of laminar flow. Further experiments were carried out and reported in this section to investigate the role of turbulence.

Turbulence intensity was introduced as a quantitative parameter to assess the level of turbulence. The definition and simulation of turbulence intensity is discussed below (see section 3.2).

Different device designs were considered in order to introduce turbulence. In the experiments reported here, jetting panels were added in the existing 12mm rectangular tubes upstream of the wick. This approach enables direct comparison between different devices as they all have highly similar geometry, with turbulence intensity being the only variable.

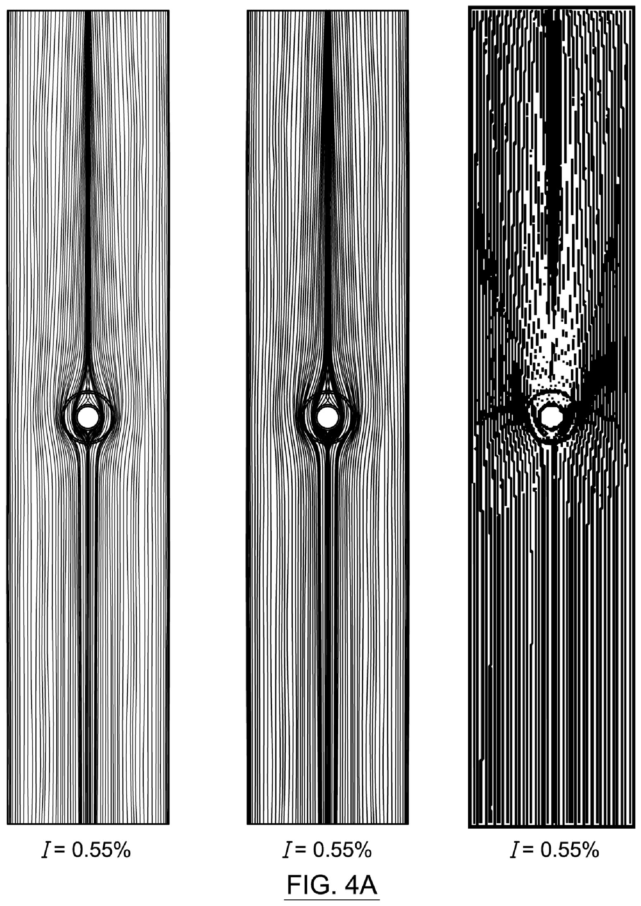

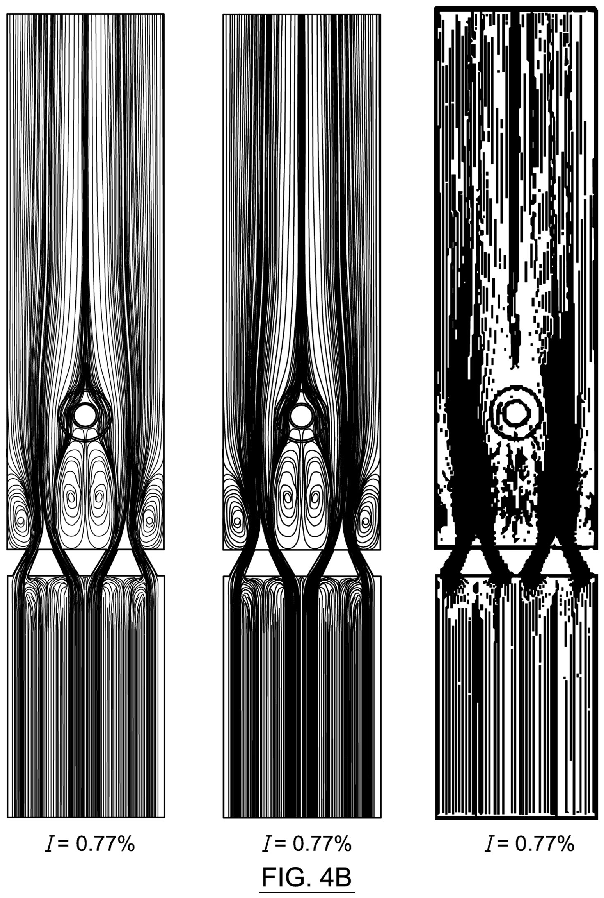

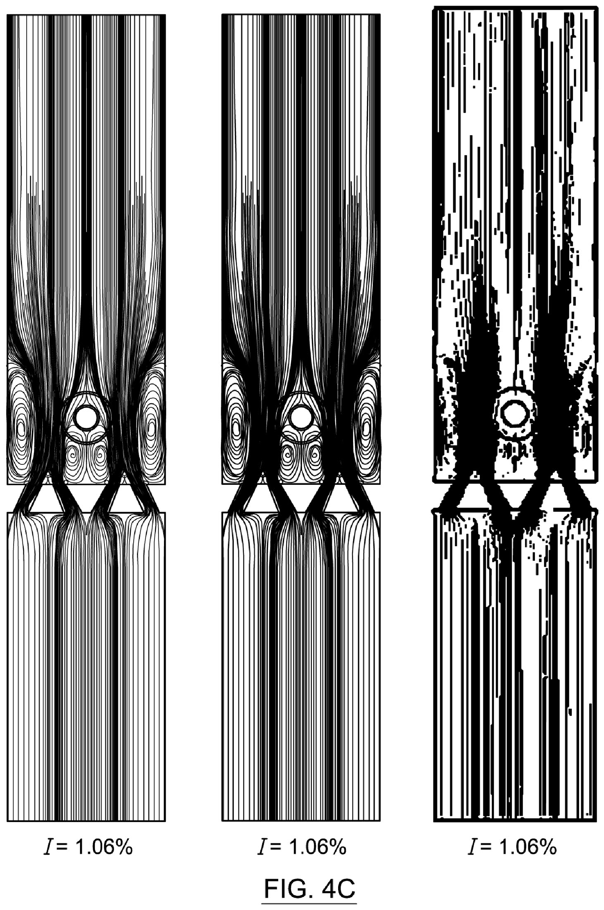

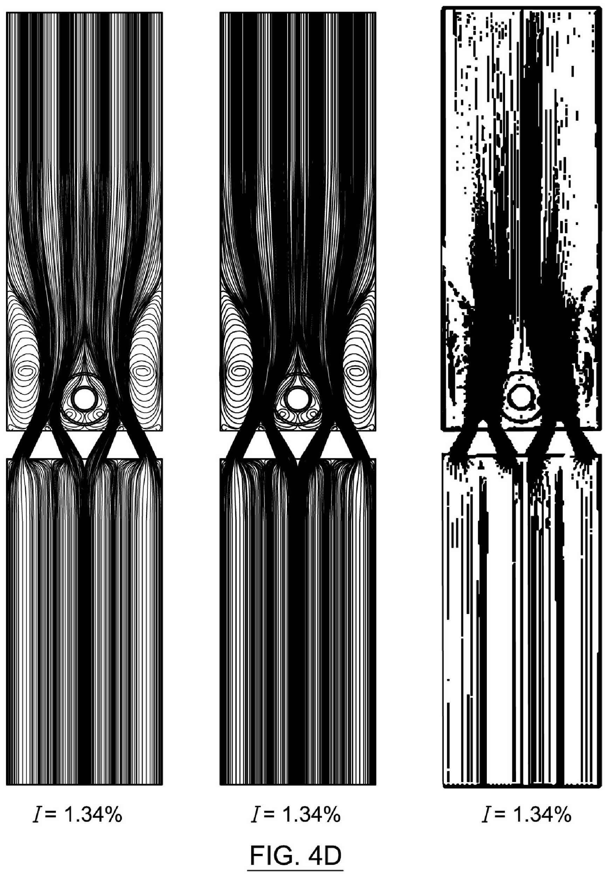

Figures 4A-4D show air flow streamlines in the four devices used in this turbulence study. Figure 4A is a standard 12mm rectangular tube with wick and coil installed as explained in the previous section, with no jetting panel. Figure 4B has a jetting panel located 10mm below (upstream from) the wick. Figure 4C has the same jetting panel 5mm below the wick. Figure 4D has the same jetting panel 2.5mm below the wick. As can be seen from Figures 4B-4D, the jetting panel has an arrangement of apertures shaped and directed in order to promote jetting from the downstream face of the panel and therefore to promote turbulent flow. Accordingly, the jetting panel can introduce turbulence downstream, and the panel causes higher level of turbulence near the wick when it is positioned closer to the wick. As shown in Figures 4A-4D, the four geometries gave turbulence intensities of 0.55%, 0.77%, 1.06% and 1.34%, respectively, with Figure 4A being the least turbulent, and Figure 4D being the most turbulent.

For each of Figures 4A-4D, there are shown three modelling images. The image on the left shows the original image (colour in the original), the central image shows a greyscale version of the image and the right hand image shows a black and white version of the image. As will be appreciated, each version of the image highlights slightly different features of the flow. Together, they give a reasonable picture of the flow conditions at the wick.

These four devices were operated to generate aerosols following the procedure explained above (section 2.1) using a flow rate of 1.3 lpm and the generated aerosols were tested for particle size in the Spraytec laser diffraction system.

### 2.3. High temperature testing

This experiment aimed to investigate the influence of inflow air temperature on aerosol particle size, in order to investigate the effect of vapour cooling rate on aerosol generation.

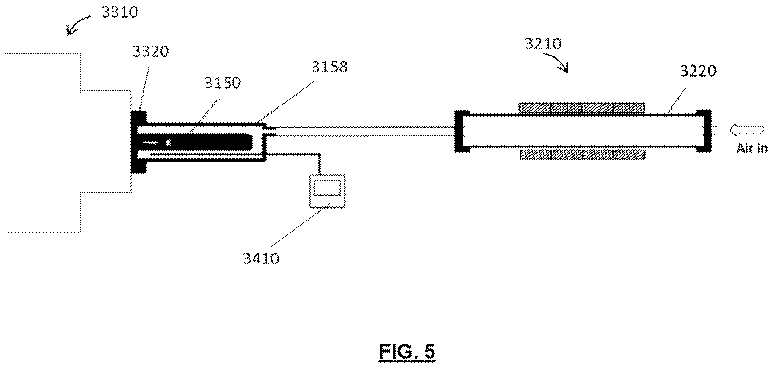

The experimental set up is shown in Figure 5. The testing used a Carbolite Gero EHA 12300B tube furnace 3210 with a quartz tube 3220 to heat up the air. Hot air in the tube furnace was then led into a transparent housing 3158 that contains the EVP device 3150 to be tested. A thermocouple meter 3410 was used to assess the temperature of the air pulled into the EVP device. Once the EVP device was activated, the aerosol was pulled into the Spraytec laser diffraction system 3310 via a silicone connector 3320 for particle size measurement.

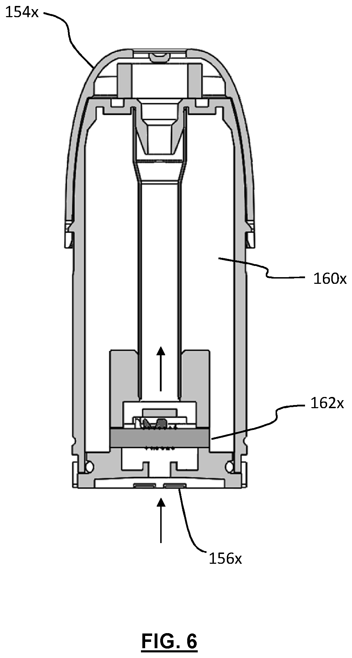

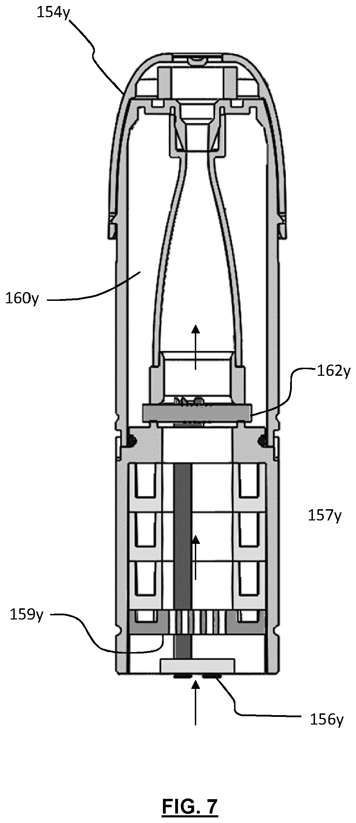

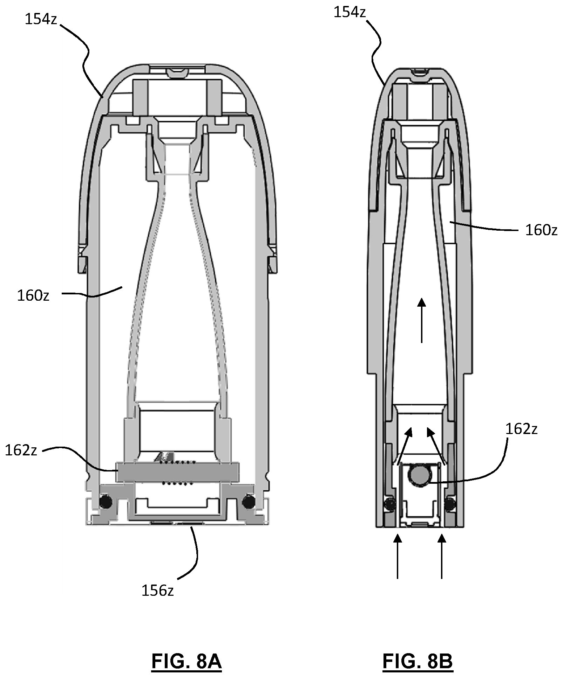

Three smoking substitute apparatuses (referred to as "pods") were tested in the study: pod 1 is the commercially available "myblu optimised" pod (Figure 6); pod 2 is a pod featuring an extended inflow path upstream of the wick (Figure 7); and pod 3 is pod with the wick located in a stagnant vaporisation chamber and the inlet air bypassing the vaporisation chamber but entraining the vapour from an outlet of the vaporisation chamber (Figures 8A and 8B).

Pod 1, shown in longitudinal cross sectional view (in the width plane) in Figure 6, has a main housing that defines a tank 160x holding an e-liquid aerosol precursor. Mouthpiece 154x is formed at the upper part of the pod. Electrical contacts 156x are formed at the lower end of the pod. Wick 162x is held in a vaporisation chamber. The air flow direction is shown using arrows.

Pod 2, shown in longitudinal cross sectional view (in the width plane) in Figure 7, has a main housing that defines a tank 160y holding an e-liquid aerosol precursor. Mouthpiece 154y is formed at the upper part of the pod. Electrical contacts 156y are formed at the lower end of the pod. Wick 162y is held in a vaporisation chamber. The air flow direction is shown using arrows. Pod 2 has an extended inflow path (plenum chamber 157y) with a flow conditioning element 159y, configured to promote reduced turbulence at the wick 162y.

Figure 8A shows a schematic longitudinal cross sectional view of pod 3. Figure 8B shows a schematic longitudinal cross sectional view of the same pod 3 in a direction orthogonal to the view taken in Figure 8A. Pod 3 has a main housing that defines a tank 160z holding an e-liquid aerosol precursor. Mouthpiece 154z is formed at the upper part of the pod. Electrical contacts 156z are formed at the lower end of the pod. Wick 162z is held in a vaporisation chamber. The air flow direction is shown using arrows. Pod 3 uses a stagnant vaporiser chamber, with the air inlets bypassing the wick and picking up the vapour/aerosol downstream of the wick.

All three pods were filled with the same e-liquid (1.6% freebase nicotine, 65:35 PG/VG ratio, no added flavour). Three experiments were carried out for each pod: 1) standard measurement in ambient temperature; 2) only the inlet air was heated to 50 °C; and 3) both the inlet air and the pods were heated to 50 °C. Five repetition runs were carried out for each experiment and the Dv50 results were taken and averaged.

### 3. Modelling work

In this study, modelling work was performed using COMSOL Multiphysics 5.4, engaged physics include: 1) laminar single-phase flow; 2) turbulent single-phase flow; 3) laminar two-phase flow; 4) heat transfer in fluids; and (5) particle tracing. Data analysis and data visualisation were mostly completed in MATLAB R2019a.

### 3.1. Velocity modelling

Air velocity in the vicinity of the wick is believed to play an important role in affecting particle size. In section 2.1, the air velocity was calculated by dividing the flow rate by the intersection area, which is referred to as "calculated velocity" in this work. This involves a very crude simplification that assumes velocity distribution to be homogeneous across the intersection area.

In order to increase reliability of the work, computational fluid dynamics (CFD) modelling was performed to obtain more accurate velocity values:
1) The average velocity in the vicinity of the wick (defined as a volume from the wick surface to 1mm away from the wick surface)
2) The maximum velocity in the vicinity of the wick (defined as a volume from the wick surface to 1mm away from the wick surface)

**Table 2. Average and maximum velocity in the vicinity of wick surface obtained from CFD modelling**

| | **Tube size [mm]** | **Flow rate [lpm]** | **Calculated velocity* [m/s]** | **Average velocity** [m/s]** | **Maximum Velocity** [m/s]** |
|---|---|---|---|---|---|
| 1.3 lpm constant flow rate | 4.5 | 1.3 | 1.17 | 0.99 | 1.80 |
| | 6 | 1.3 | 0.71 | 0.66 | 1.22 |
| | 7 | 1.3 | 0.56 | 0.54 | 1.01 |
| | 8 | 1.3 | 0.47 | 0.46 | 0.86 |
| | 10 | 1.3 | 0.35 | 0.35 | 0.66 |
| | 12 | 1.3 | 0.28 | 0.27 | 0.54 |
| | 20 | 1.3 | 0.15 | 0.15 | 0.32 |
| | 50 | 1.3 | 0.06 | 0.05 | 0.12 |
| 2.0 lpm constant flow rate | 4.5 | 2.0 | 1.81 | 1.52 | 2.73 |
| | 5 | 2.0 | 1.48 | 1.31 | 2.39 |
| | 6 | 2.0 | 1.09 | 1.02 | 1.87 |
| | 8 | 2.0 | 0.72 | 0.71 | 1.31 |
| | 12 | 2.0 | 0.42 | 0.44 | 0.83 |
| | 20 | 2.0 | 0.23 | 0.24 | 0.49 |
| | 50 | 2.0 | 0.09 | 0.08 | 0.19 |
| * Calculated by dividing flow rate with intersection area | | | | | |
| ** Obtained from CFD modelling | | | | | |

The CFD model uses a laminar single-phase flow setup. For each experiment, the outlet was configured to a corresponding flowrate, the inlet was configured to be pressure-controlled, the wall conditions were set as "no slip". A 1 mm wide ring-shaped domain (wick vicinity) was created around the wick surface, and domain probes were implemented to assess the average and maximum magnitudes of velocity in this ring-shaped wick vicinity domain.

The CFD model outputs the average velocity and maximum velocity in the vicinity of the wick for each set of experiments carried out in section 2.1. The outcomes are reported in Table 2.

### 3.2. Turbulence modelling

Turbulence intensity (*I*) is a quantitative value that represents the level of turbulence in a fluid flow system. It is defined as the ratio between the root-mean-square of velocity fluctuations, *u'*, and the Reynolds-averaged mean flow velocity, *U*: $I = \frac{u ′}{U} = \frac{\sqrt{\frac{1}{3} \left(u{′}_{x}^{2}+u{′}_{y}^{2}+u{′}_{z}^{2}\right)}}{\sqrt{{\overline{{u}_{x}}}^{2} + {\overline{{u}_{y}}}^{2} + {\overline{{u}_{z}}}^{2}}} = \frac{\sqrt{\frac{1}{3} \left[{\left({u}_{x}-\overline{{u}_{x}}\right)}^{2}+{\left({u}_{y}-\overline{{u}_{y}}\right)}^{2}++{\left({u}_{z}-\overline{{u}_{z}}\right)}^{2}\right]}}{\sqrt{{\overline{{u}_{x}}}^{2} + {\overline{{u}_{y}}}^{2} + {\overline{{u}_{z}}}^{2}}}$ where *uₓ*, *u_{y}* and *u_{z}* are the x-, y- and z-components of the velocity vector, *u̅ₓ̅*, *u̅_̅{̅y̅}̅*, and *u̅_̅{̅z̅}̅* represent the average velocities along three directions.

Higher turbulence intensity values represent higher levels of turbulence. As a rule of thumb, turbulence intensity below 1% represents a low-turbulence case, turbulence intensity between 1% and 5% represents a medium-turbulence case, and turbulence intensity above 5% represents a high-turbulence case.

In this study, turbulence intensity was obtained from CFD simulation using turbulent single-phase setup in COMSOL Multiphysics. For each of the four experiments explained in section 2.2, the outlet was set to 1.3 lpm, the inlet was set to be pressure-controlled, and all wall conditions were set to be "no slip".

Turbulence intensity was assessed within the volume up to 1 mm away from the wick surface (defined as the wick vicinity domain). For the four experiments explained in section 2.2, the turbulence intensities are 0.55%, 0.77%, 1.06% and 1.34%, respectively, as also shown in Figures 4A-4D.

### 3.3. Cooling rate modelling

The cooling rate modelling involves three coupling models in COMSOL Multiphysics: 1) laminar two-phase flow; 2) heat transfer in fluids, and 3) particle tracing. The model is setup in three steps:

### 1) Set up two phase flow model

Laminar mixture flow physics was selected in this study. The outlet was configured in the same way as in section 3.1. However, this model includes two fluid phases released from two separate inlets: the first one is the vapour released from wick surface, at an initial velocity of 2.84 cm/s (calculated based on 5 mg total particulate mass over 3 seconds puff duration) with initial velocity direction normal to the wick surface; the second inlet is air influx from the base of tube, the rate of which is pressure-controlled.

### 2) Set up two-way coupling with heat transfer physics

The inflow and outflow settings in heat transfer physics was configured in the same way as in the two-phase flow model. The air inflow was set to 25 °C, and the vapour inflow was set to 209 °C (boiling temperature of the e-liquid formulation). In the end, the heat transfer physics is configured to be two-way coupled with the laminar mixture flow physics. The above model reaches steady state after approximately 0.2 second with a step size of 0.001 second.

### 3) Set up particle tracing

A wave of 2000 particles were release from wick surface at t = 0.3 second after the two-phase flow and heat transfer model has stabilised. The particle tracing physics has one-way coupling with the previous model, which means the fluid flow exerts dragging force on the particles, whereas the particles do not exert counterforce on the fluid flow. Therefore, the particles function as moving probes to output vapour temperature at each timestep.

The model outputs average vapour temperature at each time steps. A MATLAB script was then created to find the time step when the vapour cools to a target temperature (50°C or 75°C), based on which the vapour cooling rates were obtained (Table 3).

**Table 3. Average vapour cooling rate obtained from Multiphysics modelling**

| | **Tube size [mm]** | **Flow rate [lpm]** | **Cooling rate to 50°C [°C/ms]** | **Cooling rate to 75°C [°C/ms]** |
|---|---|---|---|---|
| 1.3 Ipm constant flow rate | 4.5 | 1.3 | 11.4 | 44.7 |
| | 6 | 1.3 | 5.48 | 14.9 |
| | 7 | 1.3 | 3.46 | 7.88 |
| | 8 | 1.3 | 2.24 | 5.15 |
| | 10 | 1.3 | 1.31 | 2.85 |
| | 12 | 1.3 | 0.841 | 1.81 |
| | 20 | 1.3 | 0* | 0.536 |
| | 50 | 1.3 | 0 | 0 |
| 2.0 lpm constant flow rate | 4.5 | 2.0 | 19.9 | 670 |
| | 5 | 2.0 | 13.3 | 67 |
| | 6 | 2.0 | 8.83 | 26.8 |
| | 8 | 2.0 | 3.61 | 8.93 |
| | 12 | 2.0 | 1.45 | 3.19 |
| | 20 | 2.0 | 0.395 | 0.761 |
| | 50 | 2.0 | 0 | 0 |
| * Zero cooling rate when the average vapour temperature is still above target temperature after 0.5 second | | | | |

### 4. Results and discussions

Particle size measurement results for the rectangular tube testing are shown in Table 4. For every tube size and flow rate combination, five repetition runs were carried out in the Spraytec laser diffraction system. The Dv50 values from five repetition runs were averaged, and the standard deviations were calculated to indicate errors, as shown in Table 4.

In this section, the roles of different factors affecting aerosol particle size will be discussed based on experimental and modelling results.

**Table 4. Particle size measurement results for the rectangular tube testing**

| | **Tube size [mm]** | **Flow rate [lpm]** | **Dv50 average [µm]** | **Dv50 standard deviation [µm]** |
|---|---|---|---|---|
| 1.3 Ipm constant flow rate | 4.5 | 1.3 | 0.971 | 0.125 |
| | 6 | 1.3 | 1.697 | 0.341 |
| | 7 | 1.3 | 2.570 | 0.237 |
| | 8 | 1.3 | 2.705 | 0.207 |
| | 10 | 1.3 | 2.783 | 0.184 |
| | 12 | 1.3 | 3.051 | 0.325 |
| | 20 | 1.3 | 3.116 | 0.354 |
| | 50 | 1.3 | 3.161 | 0.157 |
| 2.0 lpm constant flow rate | 4.5 | 2.0 | 0.568 | 0.039 |
| | 5 | 2.0 | 0.967 | 0.315 |
| | 6 | 2.0 | 1.541 | 0.272 |
| | 8 | 2.0 | 1.646 | 0.363 |
| | 12 | 2.0 | 3.062 | 0.153 |
| | 20 | 2.0 | 3.566 | 0.260 |
| | 50 | 2.0 | 3.082 | 0.440 |
| 1.0 m/s constant air velocity | 5.0 | 1.4 | 1.302 | 0.187 |
| | 8 | 2.8 | 1.303 | 0.468 |
| | 20 | 8.6 | 1.463 | 0.413 |

### 4.1. Decouple the factors affecting particle size

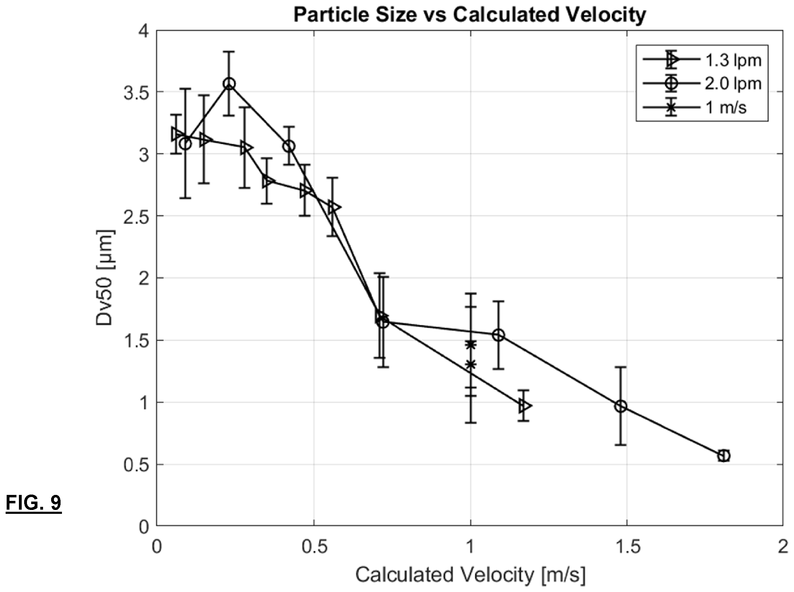

The particle size (Dv50) experimental results are plotted against calculated air velocity in Figure 9. The graph shows a strong correlation between particle size and air velocity.

Different size tubes were tested at two flow rates: 1.3 lpm and 2.0 lpm. Both groups of data show the same trend that slower air velocity leads to larger particle size. The conclusion was made more convincing by the fact that these two groups of data overlap well in Figure 9: for example, the 6mm tube delivered an average Dv50 of 1.697 µm when tested at 1.3 lpm flow rate, and the 8mm tube delivered a highly similar average Dv50 of 1.646 µm when tested at 2.0 lpm flow rate, as they have similar air velocity of 0.71 and 0.72 m/s, respectively.

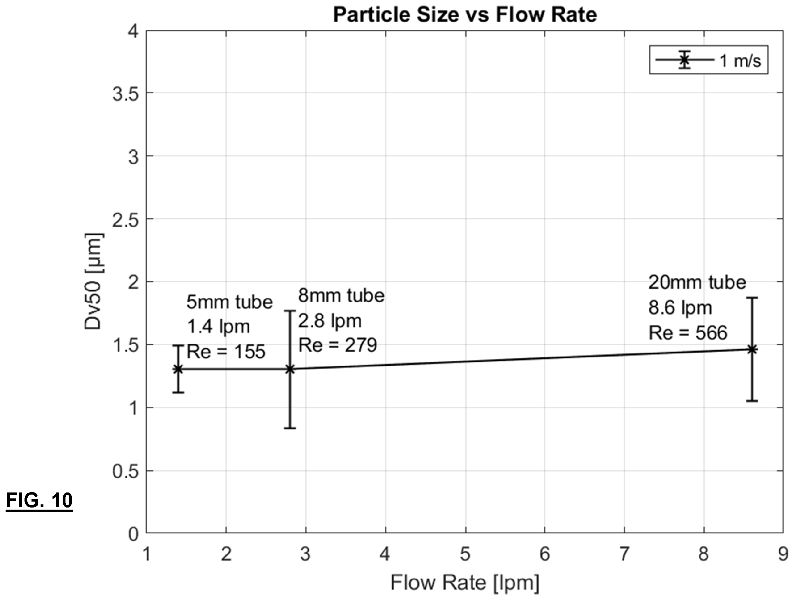

In addition, Figure 10 shows the results of three experiments with highly different setup arrangements: 1) 5mm tube measured at 1.4 lpm flow rate with Reynolds number of 155; 2) 8mm tube measured at 2.8 lpm flow rate with Reynolds number of 279; and 3) 20mm tube measured at 8.6 lpm flow rate with Reynolds number of 566. It is relevant that these setup arrangements have one similarity: the air velocities are all calculated to be 1 m/s. Figure 10 shows that, although these three sets of experiments have different tube sizes, flow rates and Reynolds numbers, they all delivered similar particle sizes, as the air velocity was kept constant. These three data points were also plotted out in Figure 9 (1 m/s data with star marks) and they tie in nicely into particle size-air velocity trendline.

The above results lead to a strong conclusion that air velocity is an important factor affecting the particle size of EVP devices. Relatively large particles are generated when the air travels with slower velocity around the wick. It can also be concluded that flow rate, tube size and Reynolds number are not necessarily independently relevant to particle size, providing the air velocity is controlled in the vicinity of the wick.

### 4.2. Further consideration of velocity

In Figure 9 the "calculated velocity" was obtained by dividing the flow rate by the intersection area, which is a crude simplification that assumes a uniform velocity field. In order to increase reliability of the work, CFD modelling has been performed to assess the average and maximum velocities in the vicinity of the wick. In this study, the "vicinity" was defined as a volume from the wick surface up to 1 mm away from the wick surface.

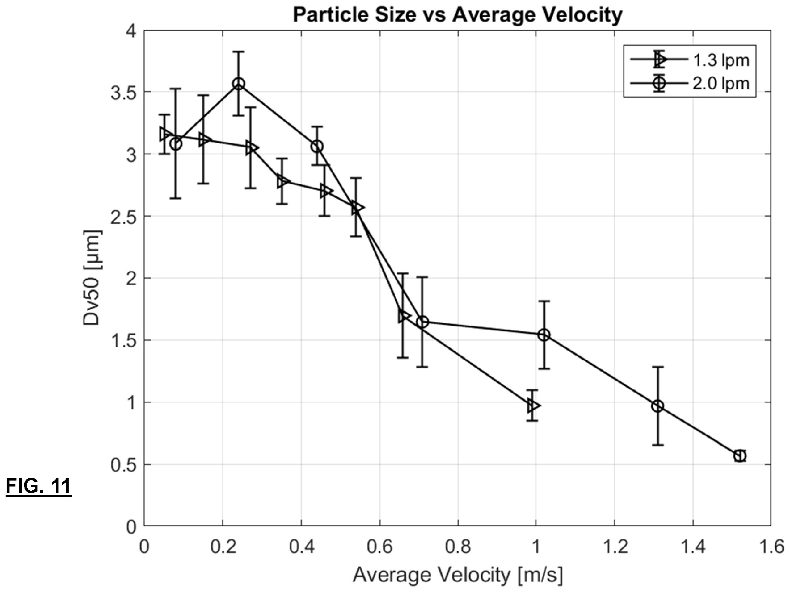

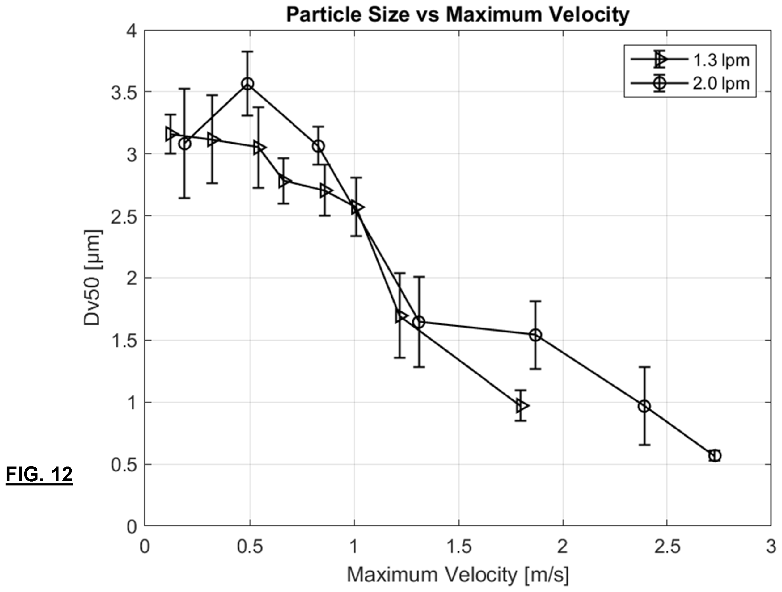

The particle size measurement data were plotted against the average velocity (Figure 11) and maximum velocity (Figure 12) in the vicinity of the wick, as obtained from CFD modelling.

The data in these two graphs indicates that in order to obtain an aerosol with Dv50 larger than 1 µm, the average velocity should be less than or equal to 1.2 m/s in the vicinity of the wick and the maximum velocity should be less than or equal to 2.0 m/s in the vicinity of the wick.

Furthermore, in order to obtain an aerosol with Dv50 of 2 µm or larger, the average velocity should be less than or equal to 0.6 m/s in the vicinity of the wick and the maximum velocity should be less than or equal to 1.2 m/s in the vicinity of the wick.

It is considered that typical commercial EVP devices deliver aerosols with Dv50 around 0.5 µm, and there is no commercially available device that can deliver aerosol with Dv50 exceeding 1 µm. It is considered that typical commercial EVP devices have average velocity of 1.5-2.0 m/s in the vicinity of the wick.

### 4.3. The role of turbulence

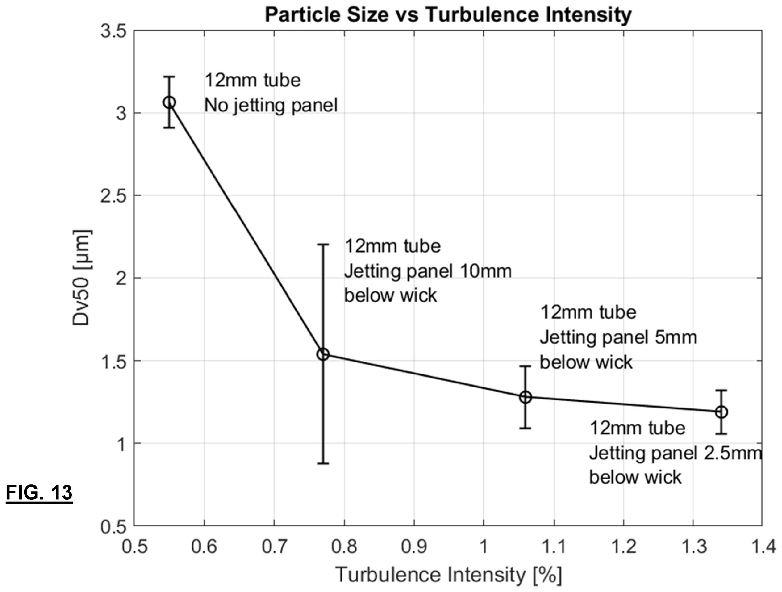

The role of turbulence has been investigated in terms of turbulence intensity, which is a quantitative characteristic that indicates the level of turbulence. In this work, four tubes of different turbulence intensities were used to general aerosols which were measured in the Spraytec laser diffraction system. The particle size (Dv50) experimental results are plotted against turbulence intensity in Figure 13.

The graph suggests a correlation between particle size and turbulence intensity, that lower turbulence intensity is beneficial for obtaining larger particle size. It is noted that when turbulence intensity is above 1% (medium-turbulence case), there are relatively large measurement fluctuations. In Figure 13, the tube with a jetting panel 10mm below the wick has the largest error bar, because air jets become unpredictable near the wick after traveling through a long distance.

The results clearly indicate that laminar air flow is favourable for the generation of aerosols with larger particles, and that the generation of large particle sizes is jeopardised by introducing turbulence. In Figure 13, the 12mm standard rectangular tube (without jetting panel) delivers above 3 µm particle size (Dv50). The particle size values reduced by at least a half when jetting panels were added to introduce turbulence.

### 4.4. Vapour cooling rate

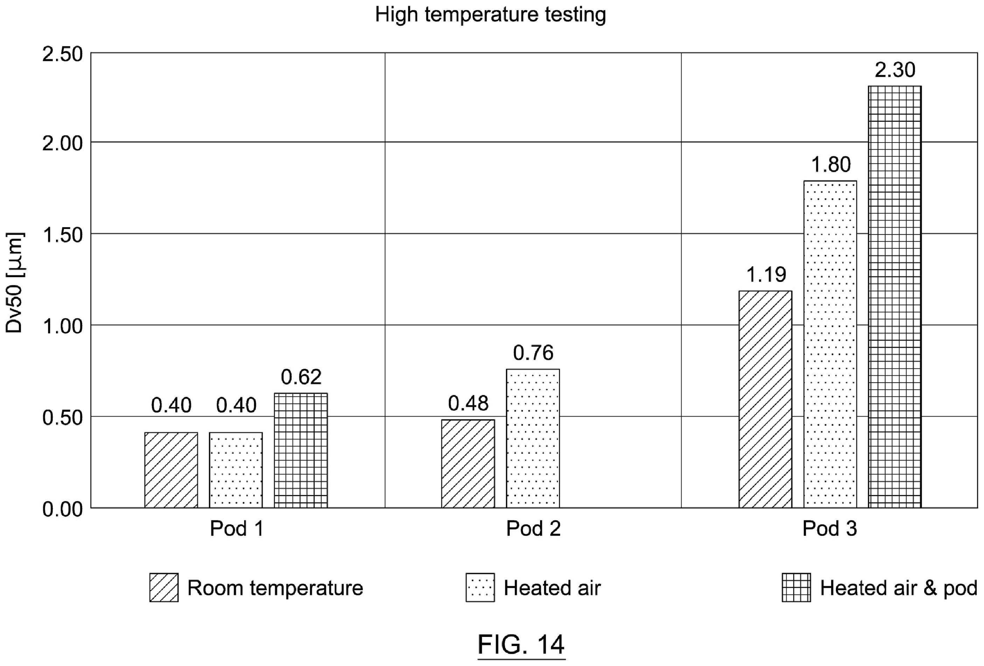

Figure 14 shows the high temperature testing results. Larger particle sizes were observed from all 3 pods when the temperature of inlet air increased from room temperature (23°C) to 50 °C. When the pods were heated as well, two of the three pods saw even larger particle size measurement results, while pod 2 was unable to be measured due to significant amount of leakage.

Without wishing to be bound by theory, the results are in line with the inventors' insight that control over the vapour cooling rate provides an important degree of control over the particle size of the aerosol. As reported above, the use of a slow air velocity can have the result of the formation of an aerosol with large Dv50. It is considered that this is due to slower air velocity allowing a slower cooling rate of the vapour.

Another conclusion related to laminar flow can also be explained by a cooling rate theory: laminar flow allows slow and gradual mixing between cold air and hot vapour, which means the vapour can cool down in slower rate when the airflow is laminar, resulting in larger particle size.

The results in Figure 14 further validate this cooling rate theory: when the inlet air has higher temperature, the temperature difference between hot vapour and cold air becomes smaller, which allows the vapour to cool down at a slower rate, resulting in larger particle size; when the pods were heated as well, this mechanism was exaggerated even more, leading to an even slower cooling rate and an even larger particle size.

### 4.5. Further consideration of vapour cooling rate

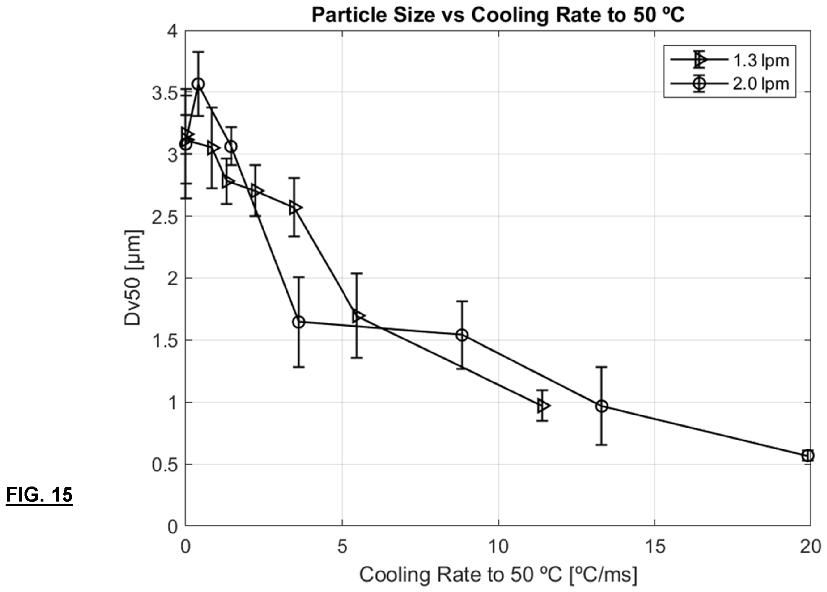

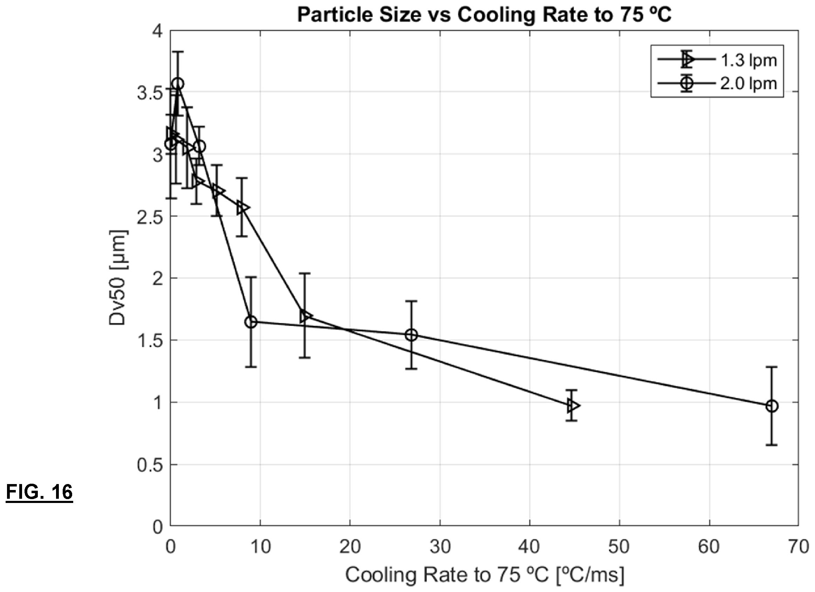

In section 3.3, the vapour cooling rates for each tube size and flow rate combination were obtained via multiphysics simulation. In Figure 15 and Figure 16, the particle size measurement results were plotted against vapour cooling rate to 50°C and 75°C, respectively.

The data in these graphs indicates that in order to obtain an aerosol with Dv50 larger than 1 µm, the apparatus should be operable to require more than 16 ms for the vapour to cool to 50°C, or an equivalent (simplified to an assumed linear) cooling rate being slower than 10 °C/ms. From an alternative viewpoint, in order to obtain an aerosol with Dv50 larger than 1 µm, the apparatus should be operable to require more than 4.5 ms for the vapour to cool to 75°C, or an equivalent (simplified to an assumed linear) cooling rate slower than 30 °C/ms.

Furthermore, in order to obtain an aerosol with Dv50 of 2 µm or larger, the apparatus should be operable to require more than 32 ms for the vapour to cool to 50°C, or an equivalent (simplified to an assumed linear) cooling rate being slower than 5 °C/ms. From an alternative viewpoint, in order to obtain an aerosol with Dv50 of 2 µm or larger, the apparatus should be operable to require more than 13 ms for the vapour to cool to 75°C, or an equivalent (simplified to an assumed linear) cooling rate slower than 10 °C/ms.

### 5. Conclusions of particle size experimental work

In this work, particle size (Dv50) of aerosols generated in a set of rectangular tubes was studied in order to decouple different factors (flow rate, air velocity, Reynolds number, tube size) affecting aerosol particle size. It is considered that air velocity is an important factor affecting particle size - slower air velocity leads to larger particle size. When air velocity was kept constant, the other factors (flow rate, Reynolds number, tube size) has low influence on particle size.

The role of turbulence was also investigated. It is considered that laminar air flow favours generation of large particles, and introducing turbulence deteriorates (reduces) the particle size.

Modelling methods were used to simulate the average air velocity, the maximum air velocity, and the turbulence intensity in the vicinity of the wick. A COMSOL model with three coupled physics has also been developed to obtain the vapour cooling rate.

All experimental and modelling results support a cooling rate theory that slower vapour cooling rate is a significant factor in ensuring larger particle size. Slower air velocity, laminar air flow and higher inlet air temperature lead to larger particle size, because they all allow vapour to cool down at slower rates.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

The following numbered clauses set out broad combinations of the inventive features herein disclosed:
1. A smoking substitute apparatus comprising an enclosure and an aerosol generator, the enclosure at least partially enclosing the aerosol generator, the aerosol generator comprising a heater and being operable to generate an aerosol by vaporising an aerosol precursor, wherein at least part of the enclosure adjacent the heater is formed from plastics material, there being provided a heat shield between said part of the enclosure and the heater and there being a heat insulating gap between said part of the enclosure and the heat shield.
2. A smoking substitute apparatus according to clause 1, wherein the heat shield has a contact portion which is in contact with the enclosure.
3. A smoking substitute apparatus according to clause 2, wherein the contact portion has a surface area smaller than one quarter of a total surface area of the heat shield.
4. A smoking substitute apparatus according to clause 2 or clause 3, wherein the heat shield has a region proximal to the heater and a region distal to the heater, the contact portion being in the region distal to the heater.
5. A smoking substitute apparatus according to any one of clauses 2 to 4, wherein the contact portion includes an end part of the heat shield.
6. A smoking substitute apparatus according to any one of the previous clauses, wherein the heat shield is fitted to the enclosure so as to restrict movement between the heat shield and the enclosure.
7. A smoking substitute apparatus according to any one of the previous clauses, wherein the heat shield provides an electrical connection between the heater and an electrical contact configured to connect with a power supply.
8. A smoking substitute apparatus according to any one of the previous clauses, wherein the heat insulating gap has a thickness of no more than 0.5 mm.
9. A smoking substitute apparatus according to any one of the previous clauses, wherein the heat shield is formed of a material selected from metals, thermosetting polymers and ceramics and composites thereof.
10. A smoking substitute apparatus according to any one of the previous clauses, wherein the heat shield presents to the heater a heat-absorbing surface having an area of at least twice as large as a plan view projection of the heater onto the heat shield.
11. A smoking substitute apparatus according to clauses 10, wherein the area of the heat-absorbing surface of the heat shield is at least 20 mm².
12. A smoking substitute apparatus according to any one of the previous clauses, wherein there are provided first and second heat shield plates disposed on opposing sides of the heater.
13. A smoking substitute apparatus according to any preceding clause, wherein the enclosure is sealed to air flow asides from an outlet.
14. A smoking substitute apparatus according to any of clauses 1 to 12, wherein the enclosure includes an air inlet and an outlet, and wherein the heat shield is configured to heat air entering the enclosure through the air inlet.
15. A smoking substitute apparatus according to any one of the previous clauses, wherein the smoking substitute apparatus is comprised by or within a cartridge configured for engagement with a base unit, the cartridge and the base unit together forming a smoking substitute system.

## Claims

1. A smoking substitute apparatus comprising an enclosure (201) and an aerosol generator, the enclosure at least partially enclosing the aerosol generator, the aerosol generator comprising a heater (164) and being operable to generate an aerosol by vaporising an aerosol precursor, wherein at least part of the enclosure adjacent the heater is formed from plastics material, there being provided a heat shield (202a, 202b) between said part of the enclosure and the heater and there being a heat insulating gap (203) between said part of the enclosure and the heat shield,
wherein the heat shield has a contact portion which is in contact with the enclosure, wherein the contact portion includes an end part of the heat shield;
characterised such that the heat shield comprises two heat shield plates disposed on opposing sides of the heater and further characterised such that the end part of one of the two heat shield plates is held in a pocket (204) defined by the enclosure.

2. A smoking substitute apparatus according to claim 1, wherein the end part of one of the two heat shield plates is bent by an angle of about 90° around a base portion of the enclosure.

3. A smoking substitute apparatus according to claim 1 or claim 2, wherein the contact portion has a surface area smaller than one quarter of a total surface area of the heat shield (202a, 202b).

4. A smoking substitute apparatus according to any one of claims 1 to 3, wherein the heat shield (202a, 202b) has a region proximal to the heater (164) and a region distal to the heater, the contact portion being in the region distal to the heater.

5. A smoking substitute apparatus according to any one of claims 1 to 4, wherein the heat shield (202a, 202b) is fitted to the enclosure (201) so as to restrict movement between the heat shield and the enclosure.

6. A smoking substitute apparatus according to any one of claims 1 to 5, wherein the heat shield (202a, 202b) provides an electrical connection between the heater and an electrical contact configured to connect with a power supply.

7. A smoking substitute apparatus according to any one of claims 1 to 6, wherein the heat insulating gap (203) has a thickness of no more than 0.5 mm.

8. A smoking substitute apparatus according to any one of claims 1 to 7, wherein the heat shield (202a, 202b) is formed of a material selected from metals, thermosetting polymers and ceramics and composites thereof.

9. A smoking substitute apparatus according to any one of claims 1 to 8, wherein the heat shield (202a, 202b) presents to the heater (164) a heat-absorbing surface having an area of at least twice as large as a plan view projection of the heater onto the heat shield.

10. A smoking substitute apparatus according to claim 9, wherein the area of the heat-absorbing surface of the heat shield (202a, 202b) is at least 20 mm2.

11. A smoking substitute apparatus according to any one of claims 1 to 10, wherein the enclosure is sealed (201) to air flow asides from an outlet (174).

12. A smoking substitute apparatus according to any of claims 1 to 10, wherein the enclosure (201) includes an air inlet (172) and an outlet (174), and wherein the heat shield (202a, 202b) is configured to heat air entering the enclosure through the air inlet.

13. A smoking substitute apparatus according to any one of claims 1 to 12, wherein the smoking substitute apparatus (150) is comprised by or within a cartridge configured for engagement with a base unit (120), the cartridge and the base unit together forming a smoking substitute system (110).
